(19) Europäisches Patentamt
European Patent Office
Office européen des brevets

(11) **EP 2 105 811 A2**

(12) **EUROPEAN PATENT APPLICATION**

(43) Date of publication:
**30.09.2009 Bulletin 2009/40**

(51) Int Cl.:
***G05B 19/042*** (2006.01)

(21) Application number: **09003300.2**

(22) Date of filing: **06.03.2009**

(84) Designated Contracting States:
**AT BE BG CH CY CZ DE DK EE ES FI FR GB GR HR HU IE IS IT LI LT LU LV MC MK MT NL NO PL PT RO SE SI SK TR**
Designated Extension States:
**AL BA RS**

(30) Priority: **27.03.2008 JP 2008084449**
**27.03.2008 JP 2008084450**
**27.03.2008 JP 2008084451**
**27.03.2008 JP 2008084452**

(71) Applicant: **Mazda Motor Corporation**
**Fuchu-cho**
**Aki-gun**
**Hiroshima 730-8670 (JP)**

(72) Inventors:
• **Sumimoto, Masato**
**Aki-gun**
**Hiroshima 730-8670 (JP)**
• **Kitagawa, Tomoko**
**Hiroshima 730-8670 (JP)**

(74) Representative: **Schiuma, Daniele Wolfgang**
**Müller-Boré & Partner**
**Grafinger Strasse 2**
**81671 München (DE)**

(54) **An onboard device control apparatus, control method of controlling an onboard device and computer program product**

(57) There is provided an onboard device control apparatus which controls an operation of an onboard device **D**, comprising a plurality of sensor nodes **SN** which comprises a state-detecting sensor portion to detect a specified state, a data processing portion to conduct calculation processing of data obtained by the state-detecting sensor portion, a memory portion to memorize specified data, and a communication portion to send and receive the data by wireless, respectively, a network forming means to form a network of the plurality of sensor nodes which are provided at plural locations in a vehicle compartment, and a control means to control the onboard device based on plural data of the plural sensor nodes forming the network. Accordingly, the onboard device can be properly controlled, considering the whole situation of a vehicle.

FIG. 1

**Description**

The present invention relates to an onboard device control apparatus, a control method of controlling an onboard device and a corresponding computer program product. In particular, an operation of an onboard device of a vehicle can be controlled therewith.

Conventionally, an automatic adjusting apparatus which adjusts the operation of the onboard device automatically based on the number of mobile phones carried by the passenger of the vehicle or a phone number is known (Japanese Patent Laid-Open Publication No. 2003-312391). Further, an air-conditioning system of the vehicle which controls the air conditioning with a temperature sensor in a vehicle compartment is known (Japanese Patent Laid-Open Publication No. 2004-291679). Also, an electric onboard-device control system which limits the use of functions by setting the use limit state for each of plural operational portions which are provided at plural seats of the seat is known (Japanese Patent Laid-Open Publication No. 2007-118626).

However, the above-described automatic adjusting apparatus may not control the onboard device, seeing a whole situation of the vehicle and relationships of respective portions. For example, an air-conditioning device is not controlled with consideration of a temperature distribution in the vehicle. That is, the air-conditioning control is not conducted individually for each of the passengers, such as a driver, a passenger seated in a passenger's seat, any other passengers, or a child. Further, other devices such as a navigation device, a power seat, a power window, are not conducted individually for each of the passengers, either.

The above-described air-conditioning system has a problem in that the air conditioning control may not be conducted so as to correspond to each state of the respective portions properly, considering the whole temperature distribution.

Meanwhile, the above-described electric onboard-device control system has a problem in that the operational limit may need to be set for each of the sitting positions of the passenger, so that the setting may be troublesome, and the limit of the operation or indication of the device may not be necessarily set for the passenger properly.

The present invention has been devised in view of the above-described problems, and an object of the present invention is to provide an onboard device control apparatus which can control an onboard device properly, considering the whole situation of a vehicle.

The object is solved by the onboard device control apparatus according to the present invention of the independent claims. Preferred embodiments of the present invention are subject of the dependent claims.

According to the present invention, there is provided an onboard device control apparatus which controls an operation of an onboard device, comprising a plurality of sensor nodes comprising a state-detecting sensor portion to detect a specified state, a data processing portion to conduct calculation processing of data obtained by the state-detecting sensor portion, a memory portion to memorize specified data, and a communication portion to send and receive the data by wireless, respectively, and a control means to control the onboard device based on plural data of the plural sensor nodes forming the network. According to the present invention, the onboard device can be properly controlled, considering the whole situation of the vehicle. Specified state may be one or more of a temperature distribution, a power window state (open or closed), a power seat condition such as seat height, seat back inclination etc., a navigation device condition and the like.

According to an embodiment of the present invention, the onboard device control apparatus further comprises a network forming means to form a network of the plurality of sensor nodes which are provided at plural locations in a vehicle compartment which preferably comprises an adhoc function and/or a multihop function. Thereby, a properly precise network can be provided. The adhoc function may in example describe a case in which the sensor node is set newly, this new sensor node is added onto the network autonomously, while in case the specified sensor node is removed, this specified sensor node is deleted from the network autonomously. The multihop function may in example describe a relay processing of another sensor node in which each sensor node establishes a communication path (routing) to another sensor node autonomously, and relays the data, which is sent from another sensor node on the network, to another sensor node.

According to another embodiment of the present invention, there is provided a sensor-node location calculating means which calculates location of the sensor node, the location of which is not decided, based on data of location of another sensor node, the location of which is decided, by using a centroid calculation. Thereby, the position of the plural sensor node can be calculated precisely.

According to another embodiment of the present invention, there is provided a sensor-node location calculating means which calculates location of the sensor node, the location of which is not decided, based on distance of the sensor node from another sensor node, the location of which is decided, by using a multi-angle measuring, the distance being calculated from data regarding the number of hops from the sensor node, the location of which is not decided, and an average distance of one hop. Thereby, the position of the plural sensor node can be calculated precisely.

According to another embodiment of the present invention, the onboard device is a air-condition control device which has plural vents, the plural state-detecting sensor portions comprise temperature sensors to detect temperature in the vehicle compartment, and the control means comprises a target-control-value calculating means which controls the air-condition control device based on data of the temperature sensors so as to provide a specified temperature distribution in the vehicle compartment. Thereby, the amount of the air or the temperature of the air from the vents can be controlled properly, considering the whole temperature distribution.

According to another embodiment of the present invention, the temperature sensor includes a high-speed type of temperature sensor and a low-speed type of temperature sensor, there is preferably provided a memory means which is provided at the sensor node and/or a gateway point which forms the network along with the sensor node and memorizes time-series temperature characteristic data as a target control value of the specified temperature distribution, the target-control-value calculating means refers to the time-series temperature characteristic data as the target control value, and the control means preferably controls the air-condition control device so as to obtain a temperature characteristic of the time-series temperature characteristic data. Thereby, the vehicle compartment can be controlled so as to provide an appropriate temperature distribution for the passenger.

According to another embodiment of the present invention, the target-control-value calculating means calculates a target control value based on data of a temperature difference of the plural sensor nodes so as to provide the specified temperature distribution in the vehicle compartment, and the control means controls temperature of conditioned air supplied from the plural vents of the air-condition control device so as to obtain the target control value. Thereby, the vehicle compartment can be controlled so as to provide an appropriate temperature distribution for the passenger.

According to another embodiment of the present invention, the plural state-detecting sensor portions comprise sitting sensors to detect respective passengers being seated in seats, and the target-control-value calculating means calculates a target control value for the temperature distribution in the vehicle compartment based on the number of passengers seated and/or position of passengers seated. Thereby, the vehicle compartment can be controlled so as to provide an appropriate temperature distribution for the passenger, considering the disposition of the passenger or the number of the passenger.

According to another embodiment of the present invention, the sensor node further comprises a portable terminal detecting portion to detect a portable terminal which preferably has an identification ID for identifying the passenger, the onboard device control apparatus preferably further comprises a memory means to memorize data of the specified state which is preferable to each passenger for each identification ID of the passenger, and/or the target-control-value calculating means calculates a target control value for controlling the air-condition device based on the data of the specified state. Thereby, the air-conditioning device can be controlled so as to be proper for the passenger having the identification ID.

According to another embodiment of the present invention, the target-control-value calculating means calculates the target control value for controlling the air-condition device based on the data of the specified state, obtains a target control value for another identification ID via the network of the sensor nodes, and/or adjusts the target control values of the respective identification IDs in case there is a specified large difference in the target control values. Thereby, in case the onboard device is the air-conditioning device, for example, the harmonious air conditioning can be controlled in the vehicle compartment.

According to another embodiment of the present invention, the sensor node comprises a receiving portion to receive an identification ID for identifying the passenger which is memorized in a memory portion of a portable terminal carried by the passenger and a specified data, the network forming means forms a network of the sensor nodes which are provided at plural locations in the vehicle compartment along with the portable terminal carried by the passenger, and the control means controls the onboard device based on plural data of the plural sensor nodes and the portable terminal carried by the passenger which form the network in such a manner that the control means determines a control value of the onboard device or permission/prohibition of an operation of the onboard device for each identification ID of the portable terminal carried by the passenger who is detected seated by the sensor nodes. Thereby, it can be detected properly, by using the network of the sensor node and the portable terminal, which seat the passenger is seated in. Accordingly, the control of the onboard device can be conducted properly for the passenger.

According to another embodiment of the present invention, the onboard device is an electrically-operated seat, there is provided a memory means to memorize a seat position of the electrically-operated seat for each identification ID, and the control means controls the electrically-operated seat such that the seat position of the seat controlled becomes the one which is memorized by the memory means for each identification ID. Thereby, even if the passenger carrying the portable terminal is seated in any seat, the suitable seat position for the passenger can be provided.

According to another embodiment of the present invention, there is provided a data updating means which updates the seat position memorized by the memory means in such a manner that the seat position originally memorized by the memory means is replaced by a new seat position which is set through the passenger's changing the electrically-operated seat. Thereby, the suitable seat position for the passenger can be provided at the next time of ingress of the vehicle.

According to another embodiment of the present invention, the memory means is a memory portion of the portable terminal which receives and memorizes data regarding the control of the onboard device, the data memorized by the memory portion is the one regarding a past seat position of the electrically-operated seat which is used at a past time of driving of the vehicle, and the control means controls the electrically-operated seat such that the seat position of the seat controlled becomes the past seat position which is used at the past time of driving of the vehicle, referring to the identification ID of the portable terminal and the data of the past seat position. Thereby, the seat position which is based on the updated best data can be provided.

According to another embodiment of the present invention, the control means adjusts the target control values of the identification IDs in case there is a specified large difference in the control values of the identification IDs. Thereby, in case the onboard device is an electrically-operated seat and its seat back interferes with another passenger when reclined, for example, the amount of reclining and the like are adjusted for each seat, so that the harmonious control of the seat position can be provided.

According to another embodiment of the present invention, the onboard device is a power window, there is provided a memory means to memorize data of permission/prohibition of use of the power window for each identification ID, and the control means preferably controls the power window such that an operation of the power window is permitted or prohibited based on the data of the permission/prohibition memorized. Thereby, the suitable operation of the power window for the passenger can be provided. For example, in case the passenger having the identification ID showing a child gets on the vehicle, the operation of the power window can be limited.

According to another embodiment of the present invention, the onboard device is a navigation device, plural operating means to operate the navigation device are provided at plural locations in the vehicle compartment, the state-detecting sensor portion of the sensor nodes detects a state of the passenger, there is provided a memory means to memorize data of an operational right of the operating means which is set in plural stages in accordance with the state of the passenger which is detected by the state-detecting sensor portion of the sensor nodes, there is provided an operational-right determining means to determine the operational right of the operating means by the passenger, comparing the state of the passenger detected by the state-detecting sensor portion of the sensor nodes with the plural-stage operational right memorized by the memory means, and there is an operation setting means to set the operational means so as to provide the operational right which is determined by the operational-right determining means. Thereby, the control of the navigation device can be conducted in accordance with the situation of the passenger (sitting state, distinction of an adult and a child, sitting position, for example).

According to another embodiment of the present invention, the state-detecting sensor portions of the sensor nodes are passenger detecting sensors which are provided at respective seats so as to determine a sitting position of the passenger, the data of the operational right memorized by the memory means is preferably the one of the operational right which is set in plural stages in accordance with the sitting position of the passenger, the operational-right determining means preferably determines the operational right of the passenger, comparing the operational right memorized with the sitting position of the passenger determined, and the operation setting means preferably sets the operational means so as to provide the operational right determined. Thereby, the sitting position of the passenger can be recognized easily by the passenger detecting sensors provided at the respective seats, and the suitable operational right to the sitting position can be provided for the passenger seated. In case the operational means is an operational button of the air-conditioning device and an operational button of the navigation device, for example, it can be controlled in such a manner that the passenger seated in the passenger's (assistant's) seat can operate the operational button of the air-conditioning device, but not operate the operational button of the navigation device.

According to another embodiment of the present invention, the sensor node further comprises a portable terminal detecting portion to detect a portable terminal which has an identification ID for identifying the passenger, the memory means memorizes the data of the operational right of the operating means which is set in plural stages in accordance with the identification ID, and the operational-right determining means determines the operational right of the operating means by the passenger, comparing the identification ID of the passenger which is detected as the state of the passenger with the plural-stage operational right memorized by the memory means. Thereby, the identification of the passenger with the identification ID (the identification of a driver, adult or child, male or female, for example) can be facilitated regardless of the sitting position, so that the operational right of the operational means can be set properly.

According to another embodiment of the present invention, the operational-right determining means determines that in case the passenger detected by the passenger detecting sensor does not have the portable terminal or the identification ID, there exists a low-level operational right, without comparing the identification ID with the plural-stage operational right memorized by the memory means. Thereby, even in case the passenger without the identification ID gets on the vehicle for the first time, the minimum operation of the operational means such as the temperature setting of the air conditioning can be available, but the sophisticated operation such as the setting of the navigation can be prohibited, for example.

According to the invention, there is further provided a control method of controlling an operation of an onboard device, comprising the steps of:

detecting data of a plurality of sensor nodes ,

conducting calculation processing of detected data,

memorizing specified data in a memory portion, and

sending and receiving the data by a wireless communication path, respectively; and

controlling the onboard device based on plural data of the plural sensor nodes.

According to an embodiment, the control method further comprises the step of forming a network of the plurality of sensor nodes which are provided at plural locations in a vehicle compartment which preferably comprises an adhoc function and/or a multihop function.

According to the invention, there is further provided a computer program product comprising computer-implemented instructions which, when loaded and executed on a suitable system, can perform the steps of a method, as described above, wherein the computer program product is particularly embodied as a computer-readable storage medium, as a signal and/or as a data stream.

Other features, aspects, and advantages of the present invention will become apparent from the following description which refers to the accompanying drawings.

FIG. **1** is a whole structure of a vehicle which is equipped with an onboard device control apparatus according to first through fifth embodiments of the present invention.

FIG. **2** is a whole structure of the vehicle which is equipped with the onboard device control apparatus according to the first through fifth embodiments of the present invention.

FIG. **3** is a block diagram showing a sensor node of the onboard device control apparatus.

FIG. **4** is a block diagram showing a gateway point.

FIG. **5** is a block diagram showing a portable terminal.

FIG. **6** is a diagram schematically showing network information among the sensor nodes and a gateway point, and a device which is controlled by the gateway point.

FIG. **7** is a diagram schematically showing network information among a portable terminal, sensor nodes and a gateway point, and a device which is controlled by the gateway point.

FIG. **8** is a flowchart showing a first method of detecting locations of a sensor node **SN** or a portable terminal **M.**

FIG. **9** is an example of the first method of detecting the locations of the sensor node **SN** or the portable terminal **M.**

FIG. **10** is a flowchart showing a second method of detecting the locations of the sensor node **SN** or the portable terminal **M.**

FIG. **11** is an example of the second method of detecting the locations of the sensor node **SN** or the portable terminal **M.**

FIG. **12** is a flowchart showing a control of the onboard device control apparatus according to the first embodiment of the present invention.

FIG. **13** is a table for determining rights of adjustment of the device for each user, which are memorized in advance at the gateway point **G** or the sensor node **SN.**

FIG. **14** is a flowchart showing a suitable adjustment processing of a seat.

FIG. **15** is a flowchart showing a limit processing of a power window.

FIG. **16** is a block diagram showing a sensor node of the onboard device control apparatus according to the second and third embodiments of the present invention.

FIG. **17** is a flowchart showing a control of the onboard device control apparatus according to the second embodiment of the present invention.

FIG. **18** is a schematic diagram of visualized measurement data, holding data and communication of the sensor node **SN** of the onboard device control apparatus according to the second embodiment of the present invention.

FIG. **19** is a schematic diagram of visualized measurement data, target data and communication of the sensor node **SN** of the onboard device control apparatus according to the second embodiment of the present invention.

FIG. **20** is a diagram of characteristic of a temperature sensor which is installed in the sensor node of the onboard device control apparatus according to the second embodiment of the present invention.

FIG. **21** is a flowchart showing a control of the onboard device control apparatus according to the third embodiment of the present invention.

FIG. **22** is a table for determining tastes and rights of air conditioning for each user, which are memorized in advance at the gateway point **G** or the sensor node **SN.**

FIG. **23** is a diagram schematically showing network information among sensor nodes and a gateway point, and a device which is controlled by the gateway point.

FIG. **24** is a diagram schematically showing network information among a portable terminal, the sensor nodes and the gateway point, and the device which is controlled by the gateway point.

FIG. **25** is a flowchart showing a control of the onboard device control apparatus according to the fourth embodiment of the present invention.

FIG. **26** is a diagram showing an example of locations of a monitor disposed in the vehicle and the passenger.

FIG. **27** is a flowchart showing a control of the onboard device control apparatus according to the fifth embodiment of the present invention.

FIG. **28** is a table for determining operational rights of the onboard device for each user, which are memorized in advance at the gateway point **G** or the sensor node **SN.**

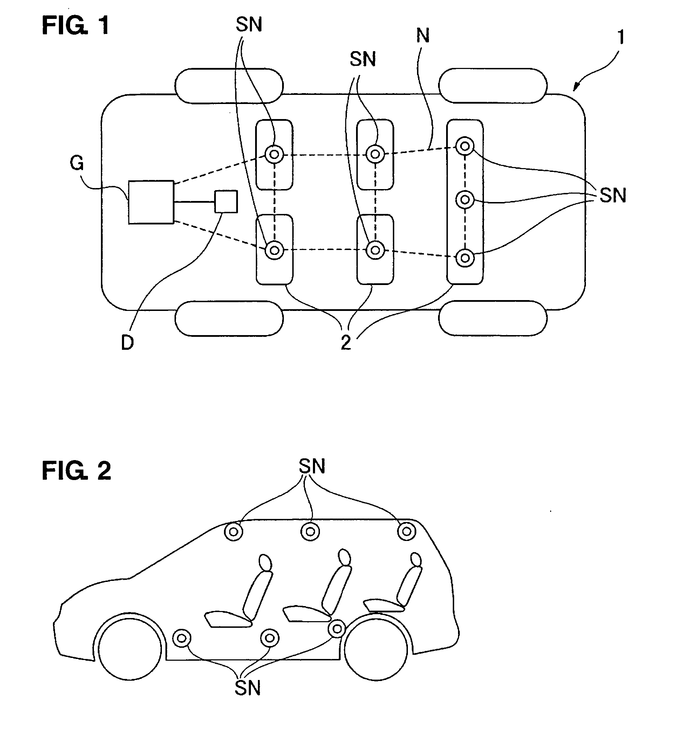

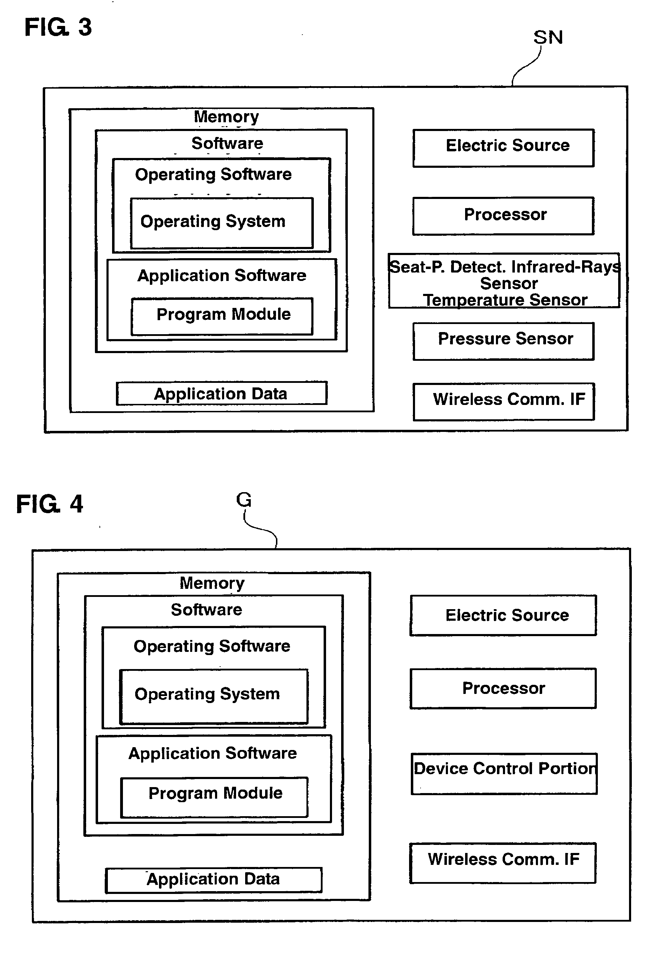

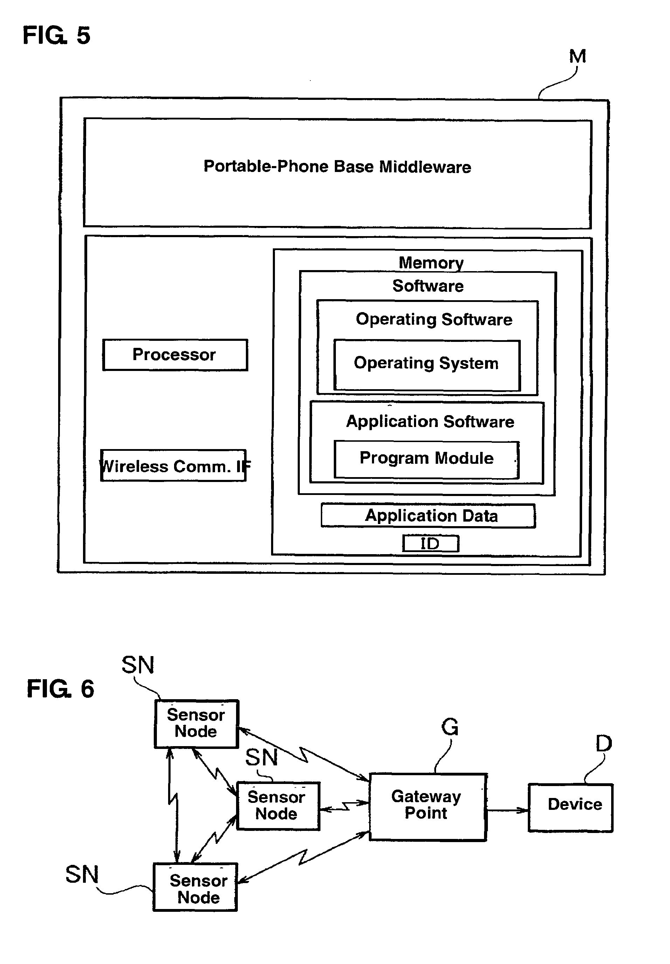

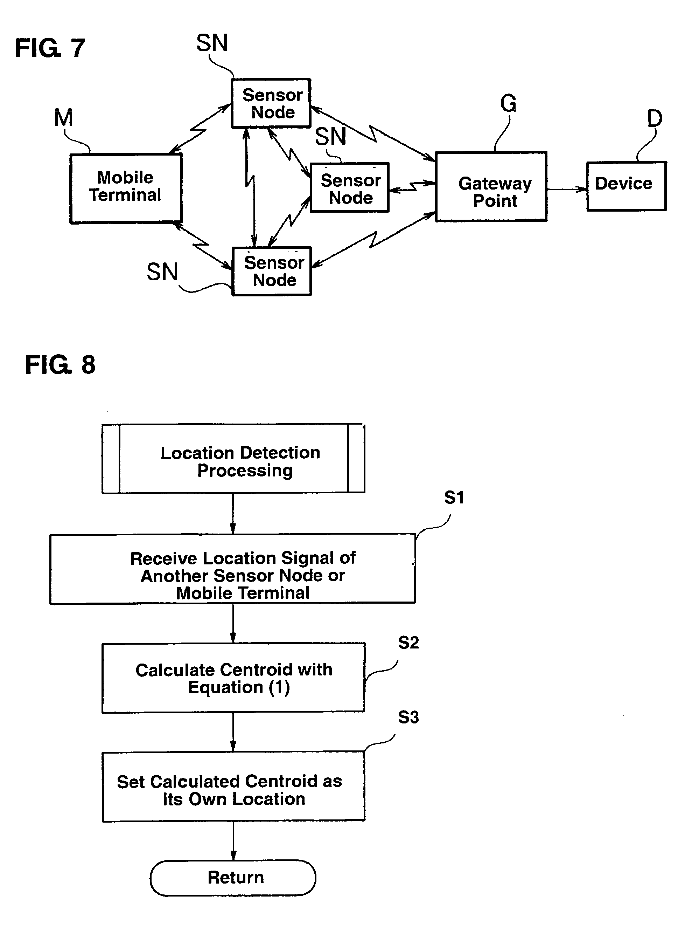

Hereinafter, preferred embodiments of the present invention will be described referring to the accompanying drawings. Initially, a basic structure of the onboard device control apparatus according to the first through fifth embodiments referring to FIGS. **1** through **7 is explained.** Although the embodiments are described separately, it should be understood that single features of one or more embodiment(s) may be combined with another embodiment. FIG. **1** is a whole structure of a vehicle which is equipped with the onboard device control apparatus according to first through fifth embodiments of the present invention. FIG. **2** is a whole structure of the vehicle which is equipped with the onboard device control apparatus according to the first through fifth embodiments of the present invention. FIG. **3** is a block diagram showing a sensor node of the onboard device control apparatus. FIG. **4** is a block diagram showing a gateway point. FIG. **5** is a block diagram showing a portable terminal. FIG. **6** is a diagram schematically showing network information among the sensor nodes and a gateway point, and a device which is controlled by the gateway point. FIG. **7** is a diagram schematically showing network information among a portable terminal, sensor nodes and a gateway point, and a device which is controlled by the gateway point.

A plurality of sensor nodes **SN** and gateway points **G** are installed to the vehicle as shown in FIGS. **1** and **2.** The gateway point **G** comprises a **CPU,** memory and wireless communication interface which are installed in a navigation device. As shown in FIG. **1,** a device **D** is coupled to the gateway point **G,** and a device control portion of the gateway point **G,** which will be described below, conducts an air conditioning control in which the temperature and the amount of air supplied from vents are controlled, a seat position control in which a seat position is moved, and a power window control in which a window is opened or closed.

The sensor node **SN,** which is relatively thin with a size of approximately a coin, is attachable to various portions in a vehicle compartment. In the embodiments, as shown in FIG. **2,** they are provided at respective seats or the like. The sensor nodes **SN** form a network (denoted by **N** in FIG. **1**) by wireless (see FIG. **6**).

The gateway point **G** receives information of the wireless communication from the respective sensor nodes **SN,** and controls an onboard device, for example, limits an operation of a navigation function and a television function of the navigation device, adjusts air conditioning by the air conditioning device for each seat, and the like (see FIG. **6**). In the embodiments, the gateway point **G** conducts information (signal) communication with the sensor node **SN,** and calculates a control value of the onboard device. The gateway point **G** forms the network by wireless along with the above-described sensor nodes **SN** (see FIG. **6**).

As shown in FIG. **3,** each sensor node **SN** comprises an electric source like a button battery, a processor as the **CPU,** and a sensor which is installed in the sensor node or attached to an outer portion of the sensor node. Herein, the sensor is a pressure sensor which functions as a sitting sensor to detect sitting of the passenger. The sensor node **SN** further comprises an interface which communicates by wireless with other sensor nodes **SN,** portable terminal **M** such as a mobile phone, and the gateway point **G.**

The sensor node **SN** comprises a memory which memorizes software which stores a program of information processing of the pressure sensor or a program of signal input/output of another portable terminal **M** and another sensor node **SN.** The program comprises operating software which includes an operating system and application software which includes a program module. The memory memorizes application data.

The memory of the sensor node **SN** memorizes detection results of the sensor of the sensor node **SN.** The processor (data processing portion) of the sensor node **SN** calculates a target control value for controlling the device **D** based on the detection results of the sensor. This calculation may be conducted by directly using the detection results of the sensor, or by using detecting results which are memorized by the memory of the sensor node **SN** or a memory of the gateway point, which will be described below. The processor of the sensor node **SN** may calculate the target control value for controlling the device **D** based on detection results which are memorized in a specified database. The specified database is provided at the memory of the senor node **SN** or the memory of the gateway point.

The calculated target control value is used by the processor and the device control portion of the gateway point **G** as described later. The device control portion of the gateway point **G** controls the device **D** so as to obtain the target control value. The calculated target control value may be memorized by the memory of the senor node **SN** or the memory of the gateway point which will be described later. Then, the processor and the device control portion of the gateway point **G** may use the target control value memorized so that the device **D** can be controlled by the device control portion so as to obtain the target control value.

The so-called "ZigBee" is known as such a communication method of the sensor node **SN,** for example. This is such that the regulation is "IEEE802.15.4," the transmission speed is "250K," the available band is "2,4GHz (worldwide)," "868MHz (Europe)" and "915MHz (USA)," the transmission distance is "maximum 10-75m," and the consumption electric power (communication) is "<60mW." There are other methods such as "feeble wireless," "specified low electric-power wireless," "Bluetooth," or "UWB (Ultra Wideband)."

The gateway point **G** preferably comprises, as shown in FIG. **4,** an electric source of a vehicle's battery, processor of **CPU,** an interface to communicate with the plural sensor nodes **SN** by wireless, a memory, and a device control portion. The memory stores software which contains a program of signal input/output of the sensor node **SN** and the portable terminal **M.** The software comprises operating software which includes an operating system and application software which includes a program module. The memory memorizes application data.

The gateway point **G** manages information from each sensor node **SN** and the network and controls the air-conditioning device, navigation device, electrically-operated seat device, power window and so on, for example. The information may be saved at an outside server via the gateway point **G** and the portable terminal **M.** The gateway point **G** may memorize information of ID of the portable terminal **M** and the like. Such information may be memorized by each sensor node **SN.**

The memory of the gateway point **G** memorizes detection results of the sensor of the sensor node **SN.** The processor (data processing portion) of the gateway point **G** preferably calculates a target control value for controlling the device **D** based on the detection results of the sensor. This calculation may be conducted by directly using the detection results of the sensor, or by using detecting results which are memorized by the memory of the sensor node **SN** or a memory of the gateway point, which will be described below. The processor of gateway point **G** may calculate the target control value for controlling the device **D** based on detection results which are memorized in a specified database, that is, the memory of the sensor node SN or the memory of the gateway point.

The calculated target control value is used by the processor and the device control portion of the gateway point **G.** The device control portion of the gateway point **G** controls the device **D** so as to obtain the target control value. The target control value which is memorized by the memory of the senor node **SN** or the memory of the gateway point which will be described later may be used by the processor and the device control portion of the gateway point **G** so that the device **D** can be controlled by the device control portion so as to obtain the target control value.

As shown in FIG. **5,** the portable terminal **M** comprises a mobile-phone base middleware, a processor as a **CPU,** an interface to communicate by wireless with the sensor nodes SN, and a memory. The memory memorizes software which stores a program of signal input/output of the sensor node **SN.** The software comprises operating software which includes an operating system and application software which includes a program module. The memory memorizes application data. The portable terminal **M** forms the wireless network along with the sensor nodes **SN** (see FIG. **7**).

Hereinafter, the concept of the sensor network will be described. As described above, the sensor node **SN** has the memory, application, wireless function and so on, in addition to the sensor. The sensor node **SN** can save the information obtained by the sensor and also send the information to another sensor node **SN** by wireless. Thereby, a specified sensor node **SN** can obtain the information which another sensor node **SN** has obtained or memorized. Thus, the plural sensor nodes **SN** are coupled on the network (see FIG. **6**), so that even if one of the sensor nodes **SN** had malfunction, the network can be maintained with another sensor node **SN.** Thus, the wireless network can be provided unlike LAN with wires in the vehicle. Further, the information of a specified sensor node **SN** at a specified location can be obtained along with the information of another sensor node **SN.**

According to the above-described sensor network, the air-conditioning device can be controlled so that the temperature of the air supplied to a passenger who is in the sunshine is relatively low compared to that for another passenger who is not in the sunshine. Likewise, the navigation, electrically-operated seat and power window can be controlled in accordance with the sitting position of the passenger.

Further, since there exits a difference in feeling the temperature in accordance with individuals, the air-conditioning device may be controlled so that the temperature of the air supplied differs for each passenger who may be identified with using the information of the portable terminal **M** carried by the passenger which is detected by the sensor node **SN.** Likewise, the navigation, electrically-operated seat and power window can be controlled properly for each passenger by using the portable device **M.**

Next, the method of detecting the location of the sensor node **SN** or the portable terminal **M** will be described. According to this method, in case the user carrying the portable terminal **M** egresses, the location information of the user seated can be detected precisely. In case the sensor node **SN** is attached to the seat, for example, the location of the sensor node **SN** which has changed its location can be detected precisely when the arrangement of the seat is changed.

Initially, the first method of "the centroid calculation of the beacon node received" will be described. Herein, a beacon node is the sensor node **SN** or the portable terminal **M** which can send and receive specified location information. A node is the sensor node **SN** or the portable terminal **M,** the location of which is unknown. A landmark is the sensor node **SN** or the portable terminal **M,** the location of which is known, and which can send and receive specified location information. A beacon is an electric-wave signal which contains the location information.

According to the centroid measurement with the centroid calculation, the landmark, the location of which is known in advance, sends periodically the beacon containing its own location information to an adjacent node by the broadcast. The beacon from the landmark does not consider the strength of the receiving electric wave, assuming its signal is sent in sphere shape. Further, it is assumed that there are many landmarks. The node, location of which is unknown, can recognize the location of the landmark which exists around from the location information contained in the beacon. In case the location (X, Y) of the landmarks, the number of which is N, can be obtained, the centroid (Xe$^{st}$, Ye$^{st}$) is calculated by the following equation.

$$(Xe^{st}, Ye^{st}) = (\frac{X_1 + \cdots + X_N}{N}, \frac{Y_1 + \cdots + Y_N}{N}) \quad \cdots 式 (1)$$

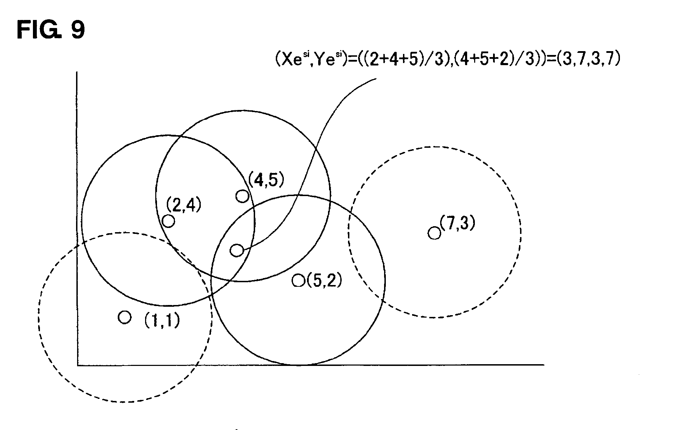

This first method will be described in FIGS. **8** and **9.** FIG. **8** is a flowchart showing the first method of detecting locations of the sensor node **SN** or the portable terminal **M.** FIG. **9** is an example of the first method of detecting the locations of the sensor node **SN** or the portable terminal **M.** In FIG. **8,** reference characters **S** denote steps. As shown in FIG. **8,** the location signal of another sensor node **SN** or the portable terminal **M** is received in step **S1.** In the next step **S2,** the calculation of the above-described equation (1) is executed. Then, this calculated centroid is set as its own location in step **S3.** Thus, as the example shown in FIG. **9,** the centroid (Xe$^{st}$, Ye$^{st}$) can be obtained.

Next, the second method of "the hop's number calculation of the beacon node received" will be described. Herein, the node is the sensor node **SN** or the portable terminal **M,** the location of which is unknown. The landmark is the sensor node **SN** or the portable terminal **M,** the location of which is known, and which can send and receive specified location information.

According to the DV-Hop measurement, the distance between the landmark and each node is preferably estimated from information of the number of hop from the landmark and the average distance of one hop. This estimation of the distance is conducted for three landmarks or more, and the own location can be calculated by the multi-angle measurement.

In a first stage, initially, each node preferably recognizes the number of hops from the landmarks in the network (refers to a hop counter). The landmark conducts flatting of a bucket containing its own location information. The hop counter which is to be counted at each time of the relay is contained in this bucket.

In the next stage, the landmark notifies the adjacent node of the average distance of one hop. The control flatting in which the "average distance of one hop" bucket is relayed at just one time is used. The distance to the landmark is calculated by multiply the number of hops by the average distance of one hop.

In the next third stage, the location measurement by the multi-angle measurement is conducted preferably by calculating the respective distances from three or more landmarks. A calculation method of the average distance of one hop will be described. The bucket, to which a specified landmark conducts the flatting, has reached another landmark as well. The landmark can calculate the physical distance between the two from its own coordinates and the coordinates of another's landmark. Further, the hop's number (h) to the landmark is known, so the value which is obtained by dividing the physical distance by the hop's number as a sample of the average distance of one hop. This processing of sample obtaining is conducted for all of other landmarks, so that the distance of one hop can be calculated finally by averaging these samples. This calculation can be executed by using the following equation.

$$C_i = \frac{\sum \sqrt{(X_i - X_j)^2 + (Y_i - Y_j)^2}}{\sum h_i}, (i \neq j) \quad \cdots 式 (2)$$

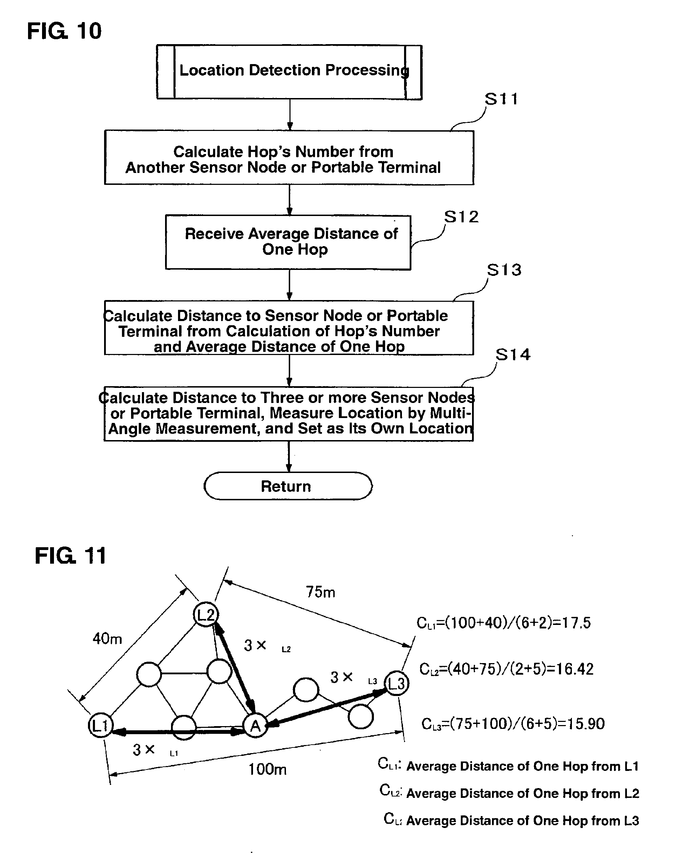

This second method will be described in FIGS. **10** and **11.** FIG. **10** is a flowchart showing the second method of detecting the locations of the sensor node **SN** or the portable terminal **M.** FIG. **11** is an example of the second method of detecting the locations of the sensor node **SN** or the portable terminal **M.** The reference character **S** denotes steps.

In the location detection processing of the second method, initially, signals of the location of another sensor node **SN** or the portable terminal **M** are received in step **S11.** In the next step **S12,** the average distance of one hop is received. Then, the distance to the sensor node **SN** or the portable terminal **M** is calculated by multiplying the number of hops by the average distance of one hop in step **S13.** In the next **S14,** the distance to three or more sensor nodes **SN** or the portable terminal **M** is calculated, and the location is measured by the multi-angle measurement and set as its own location. Thus, the location of the node is obtained as the example shown in FIG. **11.**

EMBODIMENT 1

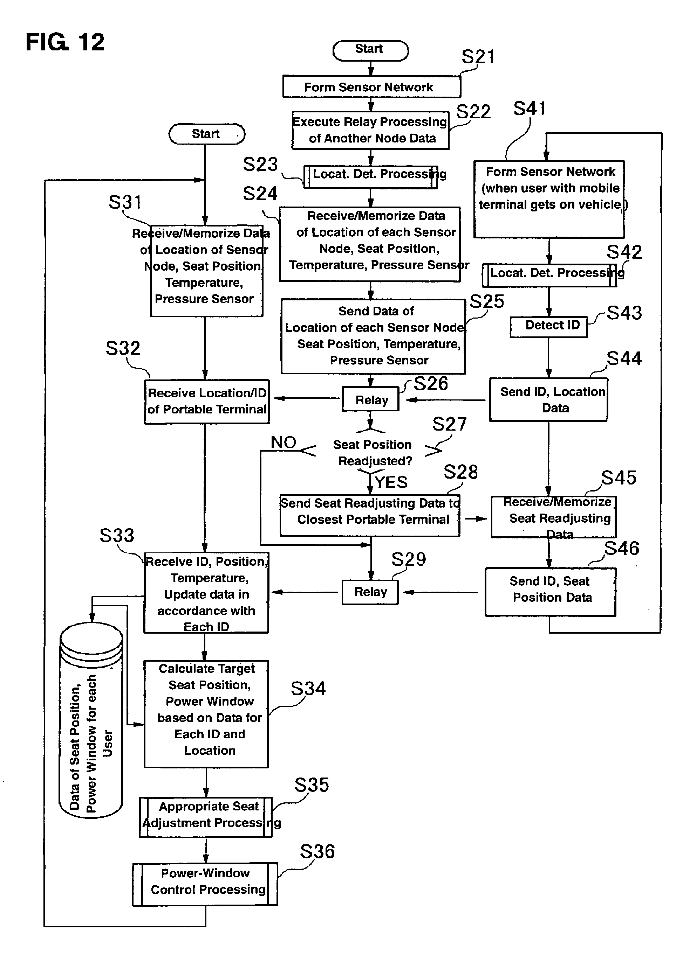

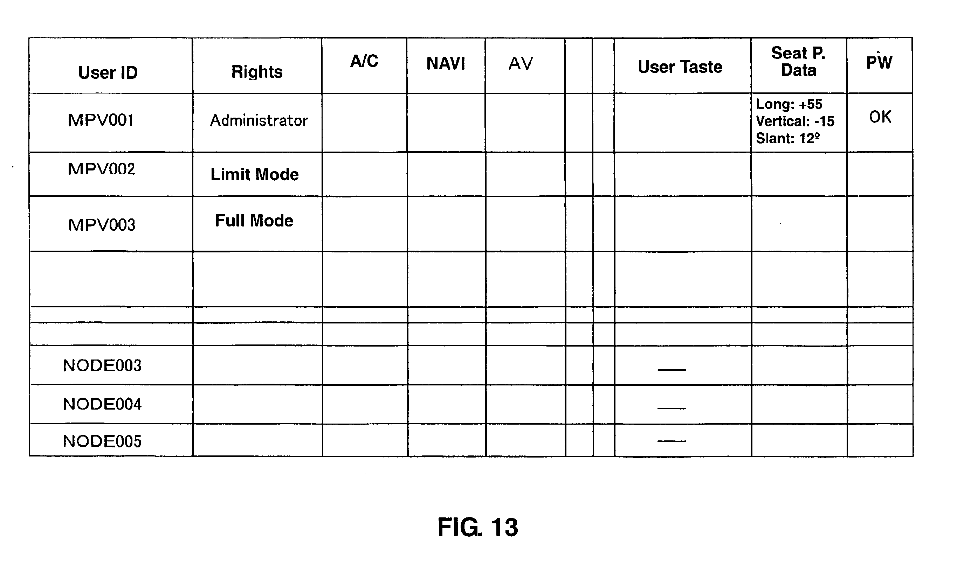

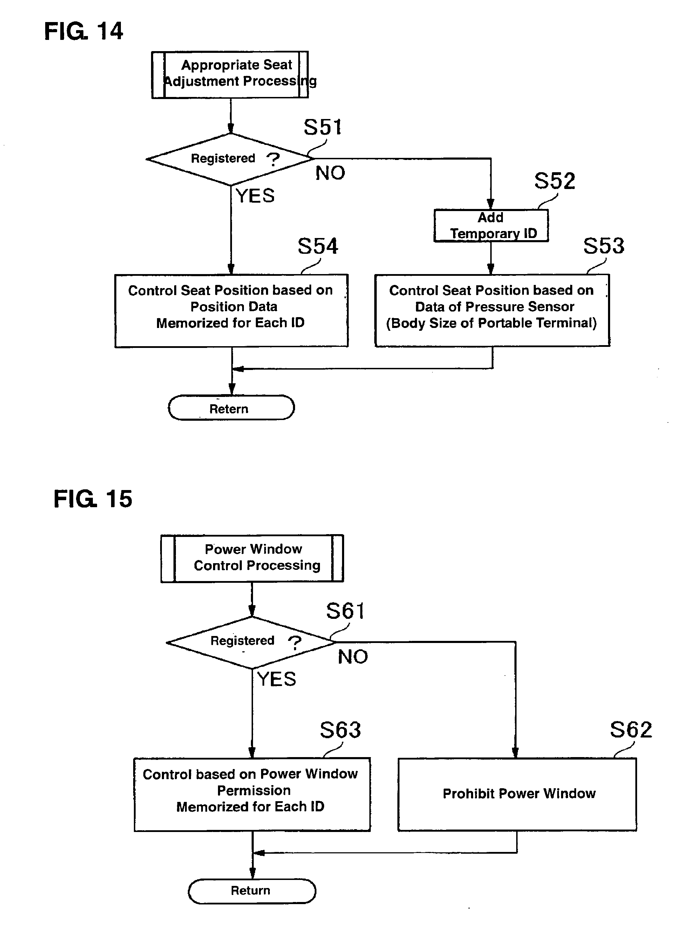

An example of the control of the onboard device control apparatus according to a first embodiment of the present invention will be described referring to FIGS. **12** through **15.** FIG. **12** is a flowchart showing the control of the onboard device control apparatus according to the first embodiment of the present invention. FIG. **13** is a table for determining rights of adjustment of the device for each user, which are memorized in advance at the gateway point **G** or the sensor node **SN.** FIG. **14** is a flowchart showing a suitable adjustment processing of the seat. FIG. **15** is a flowchart showing a limit processing of the power window. The reference character **S** denotes steps in FIGS. **12, 14** and **15.**

According to the example shown in FIG. **12,** the operational rights of the electrically-operated seat and the power window differ in users in accordance with the identification ID of the portable terminal which the user (including the driver) carries. In the present embodiment, at the sensor node are provided a temperature sensor, a pressure sensor to detect the passenger's seated, and an infrared-rays sensor to detect the seat position by detecting the distance to the standard location of the vehicle with the infrared rays.

As shown in FIG. **12,** the plural sensor nodes **SN** (see FIGS. **1** and **2**) disposed at locations in the vehicle compartment form the sensor network with their functions in step **S21.** Herein, each sensor node **SN** recognizes other sensor nodes **SN** and forms the network autonomously. The network has an adhoc function in which in case the sensor node **SN** is set newly, this new sensor node **SN** is added onto the network autonomously, while in case the specified sensor node **SN** is removed, this specified sensor node is deleted from the network autonomously.

In the next step **S22,** a relay processing of another sensor node **SN** is executed. Herein, each sensor node **SN** establishes a communication path (routing) to another sensor node **SN** autonomously, and relays the data, which is sent from another sensor node **SN** on the network, to another sensor node **SN.** This is a so-called multihop function.

In the next step **S23,** the detection processing of the location of the sensor nodes **SN** is executed with the above-described "the centroid calculation of the beacon node received" or "the hop's number calculation of the beacon node received." Herein, in case the location is known in advance, for example, in case the sensor node **SN** is provided at a fixed seat or a vehicle roof, their locations may be registered in advice in the memory of the sensor node **SN.** Further, after the location detection processing is executed once, the location is memorized in the memory. Then, this memorized location may be used at the next processing of the location detection.

Then, in the next step **S24,** the respective data of the location of each sensor node **SN,** the temperature detected by the temperature sensor of each sensor node **SN,** the seat position detected by the infrared-rays sensor, and the pressure sensor of each sensor node is sent and received among the plural sensor nodes and memorized by them. The data sending/receiving is conducted by the interface and the memorization is conduced by the memory.

In the next step **S25,** the location data of each sensor node **SN,** the seat position data, the temperature data from the temperature sensor of each sensor node **SN,** and the data of the pressure sensor is sent to the gateway point **G.** The data sending is conducted by the interface.

Next, the gateway point **G** receives the location data of each sensor node **SN,** the seat position data, the temperature data from the temperature sensor of each sensor node **SN,** and the data of the pressure sensor in step **S31,** and memorizes them. The data receiving is conducted by the interface, and the data is memorized by the memory.

Then, on the side of the portable terminal, in step **S41,** the plural sensor nodes **SN** (see FIGS. **1** and **2**), which are provided in the vehicle compartment, form the sensor network including the mobile terminal **M** by using their functions (the above-described adhoc function and multihop function) when the user carrying the mobile terminal (portable terminal) **M** gets on the vehicle.

In the next step **S42,** the detection processing of the location of the mobile terminal **M** of the user is executed with the above-described "the centroid calculation of the beacon node received" or "the hop's number calculation of the beacon node received." Then, the ID of the mobile terminal **M** is detected via the interface of each sensor node **SN** and the interface of the mobile terminal **M.** That is, it is determined who has got on the vehicle.

Then, in step **S44,** the location and ID of the mobile terminal **M** calculated in the step **42** are sent via the interface of the mobile terminal **M.** Each sensor node **SN** relays these sent data via its interface (step **S26**) and send them to the gateway point **G.** The gateway point **G** receives the data of the location and ID of the mobile terminal **M** via its interface in step **S32.**

Herein, when the user has readjusted the seat position (step **S27),** the seat sends, in step **S28,** its seat readjusting data and circumference-state data, such as the temperature, which relates to this readjusting to a specified mobile (portable) terminal **M** which is located the closest to the seat. This mobile terminal **M** receives and memorizes these data in step **S45.** Further, these data is also sent to the gateway point **G** in step **S29.**

The mobile terminal **M** relays the seat-position data in case the seat has been readjusted, or an initially-specified seat-position data in case the seat has not been readjusted via the interface of each sensor node **SN** (the step **S29**) and send them to gateway point **G.** In the step **S46,** the identification ID of the mobile terminal **M** is sent to the gateway point as well. Further, the circumference-state data of the temperature and the like which is obtained by the sensor node **SN** is also sent to the gateway point **G** in the step **S46.** Further, data on another vehicle's seat position or data on the past seat position of the present vehicle, which are memorized in the mobile terminal **M,** are sent.

The gateway point **G** receives in step **S33** the data of ID and seat position of the mobile terminal **M** sent in the steps **S28** or **S46** (the temperature data after the readjusting in case the readjusting has been conducted). In case of the setting of the seat position has been changed, the data in the database is updated (replaced) by the new seat position after the readjusting in accordance with the ID received in step **S33**. The data is as shown in FIG. **13,** for example.

In case the readjusting of the seat position has not been conducted, the target seat position is calculated based on data on the target seat position for each ID (for each user) which is memorized in the database (the memory of the gateway point **G** (or the memory of the sensor node or the memory of the mobile terminal **M**)) in step **S34**. Further, it is determined based on the data of the pressure sensor received in the step **S31** which seat the passenger is seated in, and permission/prohibition of an operation of the power window is set based on the ID of the mobile terminal **M** carried by the passenger who is seated in that seat.

According to the present embodiment, the seat-position setting can be conducted for each of the plural mobile terminals **M** by the network of the sensor node. Herein, the seat position may be set properly for each of the passengers. For example, in case another passenger is seated in a seat behind the seat which is reclined rearward, the reclining amount of the seat may be adjusted to become smaller.

The control data (table) of the onboard device for the ID (user) memorized in the database is set as shown in the table shown in FIG. **13,** in which the seat position or the permission/prohibition of the operation of the power window are set for each user ID. Other data of setting of the air conditioning, navigation or audio device is memorized as well. Further, the setting of the seat position or the power window may be conducted in accordance with the circumference state of the temperature or the like. For example, the operation of the power window may be changed from the prohibition to the permission when the temperature is relatively high. The table may be memorized by any one of the memory portion of the gateway point **G,** the memory portion of the sensor node **SN,** or the memory portion of the mobile terminal.

In the next step **S35,** the appropriate adjustment processing of the seat position is conducted based on the data of the seat position calculated in the step **S34**. According to this processing, as shown in FIG. **14,** it is determined in step **S51** whether or not the ID of the mobile terminal **M** is registered in a table like the one shown in FIG. **13.** In case it is not registered, a temporary ID is added in step **S52,** and the control proceeds to step **S53.**

In the step **S53,** a body size of the passenger is predicted from the detection value of the pressure sensor of the sensor node **SN** at each of the seats, and thereby the seat position is adjusted. That is, the electrically-operated seat is operated so as to provide an appropriate seat position for the passenger. Herein, in case the data of the body size is memorized in the mobile, that data may be used.

In case the ID of the mobile terminal **M** is registered in the table shown in FIG. **13,** the control proceeds to step **54,** where the gateway point **G** operates the electrically-operated seat so as to take the appropriate position for the passenger carrying the mobile terminal **M** with the ID based on the data of the seat position memorized for each ID (see FIG. **13**).

Next, in the step **S36,** the control processing of the power window is executed based on the data of operating the power widow set in the step **S34**. This processing conducts a determination as to whether or not the ID of the mobile terminal **M** is registered in the table shown in FIG. **13** in step **S61** of FIG. **15.**

In case it is not registered, the control proceeds to step **S62,** where the operation of the power window is prohibited. In case it is registered, meanwhile, the control proceeds to step **S63,** where the gateway point **G** sets the permission/prohibition of the operation of the power window for each passenger based on the data (see FIG. **13**).

EMBODIMENT 2

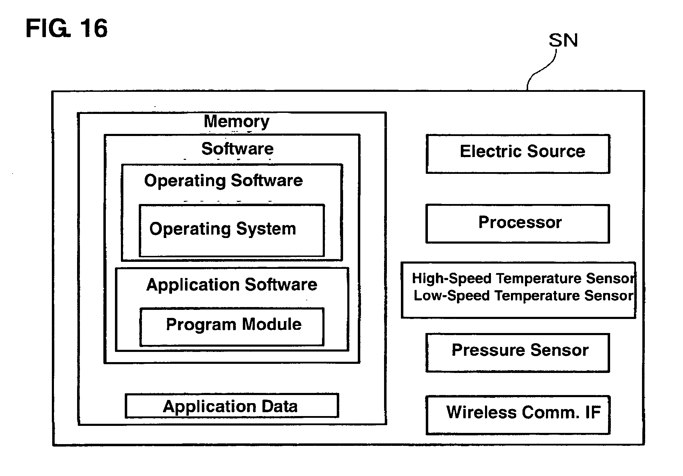

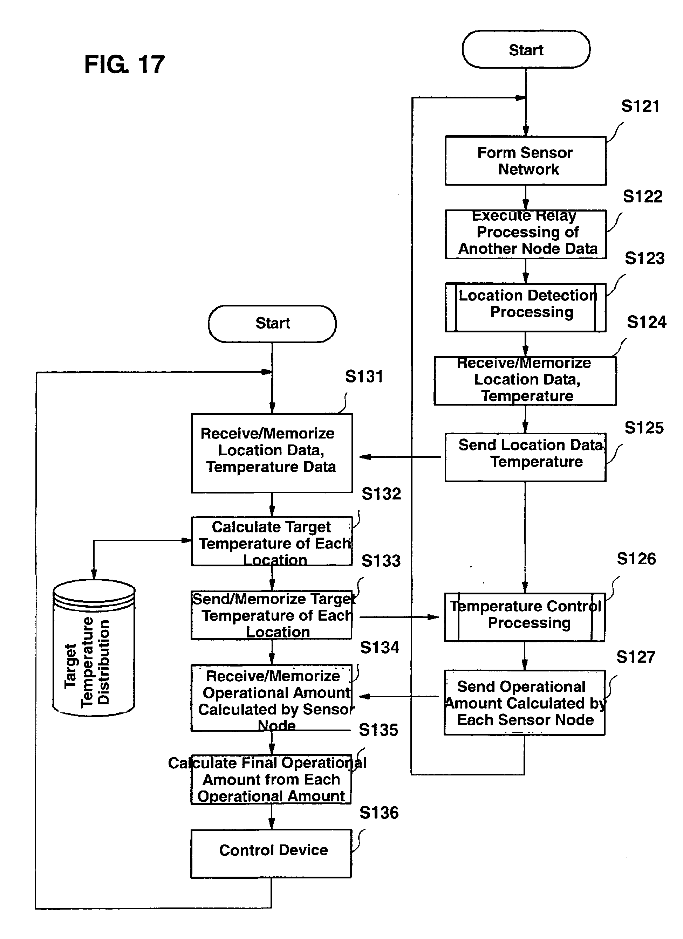

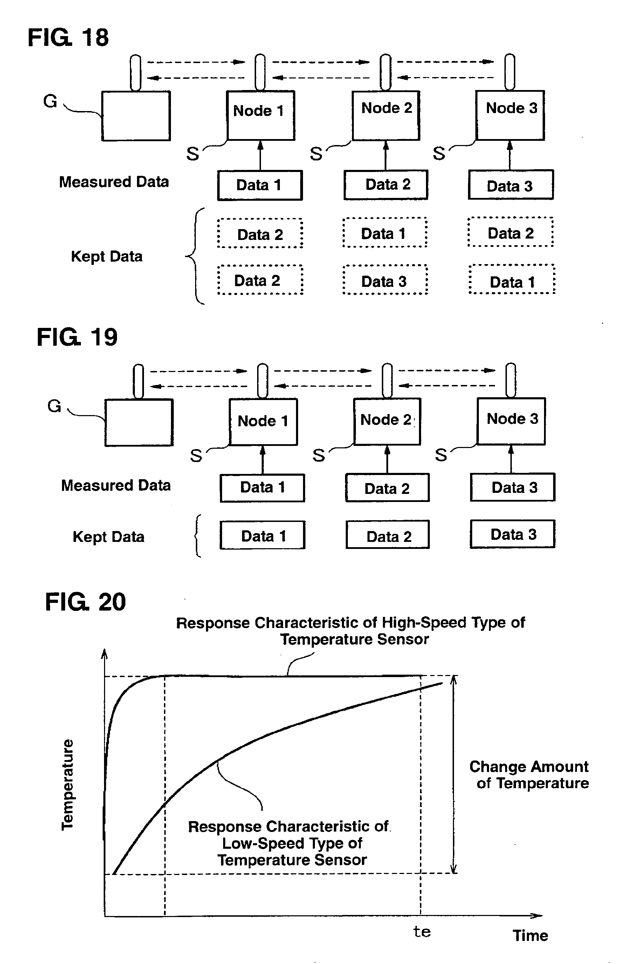

An example of the control of the onboard device control apparatus according to the second embodiment of the present invention will be described referring to FIGS. **16** through **20**. FIG. **16** is a block diagram showing a sensor node of the onboard device control apparatus according to the second embodiment of the present invention. FIG. **17** is a flowchart showing a control of the onboard device control apparatus according to the second embodiment of the present invention. FIG. **18** is a schematic diagram of visualized measurement data, holding data and communication of the sensor node **SN** of the onboard device control apparatus according to the second embodiment of the present invention. FIG. **19** is a schematic diagram of visualized measurement data, target data and communication of the sensor node **SN** of the onboard device control apparatus according to the second embodiment of the present invention. FIG. **20** is a diagram of characteristic of a temperature sensor which is installed into the sensor node of the onboard device control apparatus according to the second embodiment of the present invention. Reference characters **S** denote steps in FIG. **17.** As shown in FIG. **16,** the sensor of the present embodiment comprises the temperature sensor and the pressure sensor. In the example shown in FIG. **17,** the temperature sensor is used as the sensor node **SN** so that the air-conditioning device can be controlled based on the detection results of the temperature sensor.

Initially, as shown in FIG. **17,** the plural sensor nodes **SN** provided in the vehicle compartment form the sensor network in step **S121.** Herein, each sensor node **SN** recognizes other sensor nodes **SN** and forms the network autonomously. The network has the adhoc function in which in case the sensor node **SN** is set newly, this new sensor node **SN** is added onto the network autonomously, while in case the specified sensor node **SN** is removed, this specified sensor node is deleted from the network autonomously.

In the next step **S122,** a relay processing of another sensor node **SN** is executed. Herein, each sensor node **SN** establishes a communication path (routing) to another sensor node **SN** autonomously, and relays the data, which is sent from another sensor node **SN** on the network, to another sensor node **SN**. This is the so-called multihop function.

In the next step **S123,** the detection processing of the location of the sensor nodes **SN** is executed with the above-described "the centroid calculation of the beacon node received" or "the hop's number calculation of the beacon node received." Herein, in case the location is known in advance, for example, in case the sensor node **SN** is provided at the fixed seat or the vehicle roof, their locations may be registered in advice in the memory of the sensor node **SN**. Further, after the location detection processing is executed once, the location is memorized in the memory. Then, this memorized location may be used at the next processing of the location detection.

In the next step **S124,** the location data of the sensor nodes **SN** and the temperature data detected by the temperature sensors of the sensor nodes **SN** are received and memorized by the plural sensor nodes. The data sending/receiving is conducted by the interface and the data memorization is conduced by the memory. In this step **S124,** as shown in FIG. **18,** for example, the sensor node 1 which measures data 1 keeps (memorizes) data 2 of another sensor node **2** and data 3 of further another sensor node **3**.

In the next step **S125,** the location data of each sensor node **SN** and the temperature data from the temperature sensor of each sensor node **SN** are sent to the gateway point **G**. The data sending is conducted by the interface. For example, as shown by arrows of FIG. **18,** the data is sent from the sensor nodes **SN** to the gateway point **G**.

Next, the gateway point **G** receives the location data of each sensor node **SN** and the temperature data from the temperature sensor of each sensor node **SN,** and the data of the pressure sensor in step **S131,** and memorizes them. The data receiving is conducted by the interface, and the data is memorized by the memory.

In the next step **S132,** the target temperatures of the locations of the sensor nodes **SN**. This calculation of the target temperature is executed by the processor, which calculates the target temperatures of the locations of the sensor nodes **SN** referring to the target-temperature distribution data of the vehicle compartment which is memorized in the memory.

Herein, the temperature control processing **(S126),** which will be described later, controls the operational amount of the air-conditioning device (**D**) so as to obtain a time-series temperature data of the target-temperature distribution data. Herein, the target-temperature distribution may be set differently in accordance with the location or the number of passengers, which is detected by the pressure sensor as the sitting sensor which is provided at each sensor node **SN**.

In the next step **S133,** the target temperature at the location of each senor node **SN** is stored in the memory of the gateway point **G** and sent to each sensor node **SN**. This sending is executed by the interface.

Next, the temperature adjustment processing is executed based on the target-temperature data sent at each sensor node **SN**. At first, the operational amount of the air-conditioning device is determined such that the temperature at the location of each sensor nodes **SN** which is calculated in the above-described step **S113** becomes the one of the target-temperature distribution data. Herein, as shown in FIG. **19,** the sensor nodes have respective measurement data 1-3, and target data t1, t2, t3 according to the target-temperature distribution data are memorized. The following four control methods may be applicable as this temperature control processing.

According to the first method, the target temperatures t1, t2 and t3 are preferably provided for the respective sensor nodes **SN** (see FIG. **19**), and the feedback control is preferably executed with temperature **T1** which is detected by a low-speed type of temperature sensor or a high-speed type of temperature sensor which are provided preferably at each sensor node **SN** so as to provide the target temperatures. In this control, for example, the target temperature t1 at the location of the sensor node 1 is read out from the memory, and an operational amount U1 of controlling the temperature at the location of the sensor node 1 is preferably calculated by the following equation (3).

$$U1 = F\,(t1,\ T1) \qquad\qquad \text{- - - (3)}$$

Herein, F is a function which comprises proportional, integral or differential terms of (t1-T1) like the PID feedback equation. The calculation of the operational amount U with the above-described equation (3) is executed for each sensor node **SN**.

Herein, the low-speed type of temperature sensor has a characteristic in which the response of the temperature response of the atmosphere is restrained in such a manner that the measured temperature changes gradually as shown in FIG. **20**. Meanwhile, the high-speed type of temperature sensor has a characteristic in which the response of the temperature response of the atmosphere is very quick in such a manner that the measured temperature increases quickly as shown in FIG. **20**. In case there is a temperature difference between the low-speed type of temperature sensor and the high-speed type of temperature sensor, a current state in which the temperature is changing is shown. Thus, the temperature difference, an inclination of the temperature increase or the like can be used for the control. For example, the control considering how quick or gently the temperature of the vehicle compartment should be changed is available.

Next, according to the second method, both the low-speed type of temperature sensor and the high-speed type of temperature sensor, which are provided at the sensor nodes **SN,** are used. The temperature T1 detected by the sensor nodes **SN** is calculated with a detected temperature T1A of the low-speed type of temperature sensor and a detected temperature T1 B of the high-speed type of temperature sensor by the following equation (4).

$$T1 = \alpha T1A + \beta T1B \qquad \text{- - - (4)}$$

Herein, $\alpha$ and $\beta$ are a weighting coefficient. The temperature which the passenger feels can be detected precisely by this equation (4). Thereby, the operational amount U1 of controlling the temperature at the location of the sensor node 1 is calculated by the following equation (5).

$$U1 = F(t1, T1, T1A, T1B) \qquad \text{- - - (5)}$$

Herein, t1 is the target temperature of the sensor node 1. F is the function which comprises proportional, integral or differential terms of (t1-T1) like the PID feedback equation. The calculation of the operational amount U with the above-described equation (5) is executed for each sensor node **SN.**

According to the third method, the temperature T2, T3,... Tn of other sensor nodes 2, 3,... Tn are received via the interface, and the control amount is calculated so that the respective temperatures can provide the specified temperature distribution. Or the temperature of the vehicle compartment can be controlled so as to become uniform by controlling the temperature difference within a specified range. In this third method, the operational amount U1 of controlling the temperature at the location of the sensor node 1 is calculated by the following equation (6).

$$U1 = F(T1, T2,... Tn) \qquad \text{- - - (6)}$$

Herein, F is a function in which integration of the temperature difference $(T_j - T_i)$ of the sensor nodes **SN** becomes the minimum. Further, the operational amount U1 may be calculated with the following equation (7).

$$U1 = K1(T1 - T2) + K2(T1 - T3) + \text{- - -} Kn - 1(T1 - Tn) \qquad \text{- - - (7)}$$

K1, K2, - - - are a weighting coefficient.

Next, the fourth method is the one in which the second method using both the low-speed type of temperature sensor and the high-speed type of temperature sensor is applied to the third method. For example, the operational amount U1 of controlling the temperature at the location of the sensor node 1 is calculated with the following equation (8).

$$U1 = K1(T1 - T2) + K2(T1 - T3) + \text{- - -} Kn - 1(T1 - Tn) \qquad \text{- - - (8)}$$

T1 is calculated by the following equation (9) like the second method.

$$T1 = \alpha T1A + \beta T1B \qquad \text{- - - (9)}$$

Herein, the temperature control processing of the first through fourth methods in the above-described step **S126** may be executed by the processor of the gateway point **G.**

Then, in the next step **S127,** the operational amount **U** which is calculated in the step **S126** at each sensor nodes **SN** is sent to the gateway point **G** via the interface. The gateway point **G** receives the operational amount **U** which is calculated at each sensor nodes **SN** and memorizes it in the memory in step **S134.**

Then, the final operational amount of the air-conditioning device **D** is calculated in step **S135** from the operational amount which is calculated at each senor node **SN** which has received and memorized in the step **S134.** Specifically, the supply amount of air from the vents of the air-conditioning device **D** and the temperature of the air supplied are controlled so as to provide the specified temperature characteristic (for example, the above-described target-temperature distribution data). Then, in the next step **S136,** the air-conditioning device is controlled so as to provide the supply amount of air and the air temperature calculated in the step **S135.**

EMBODIMENT 3

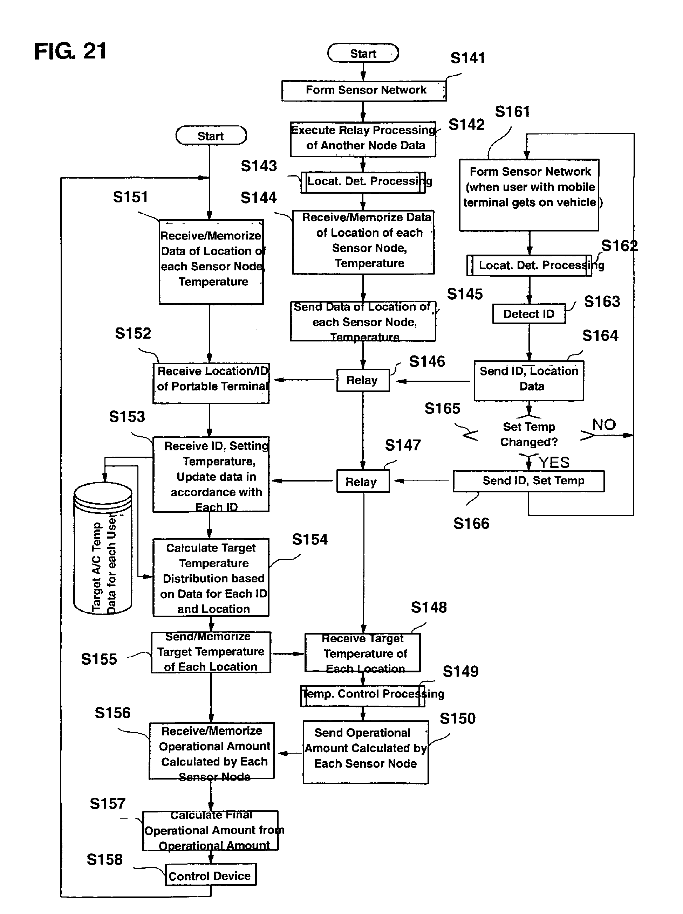

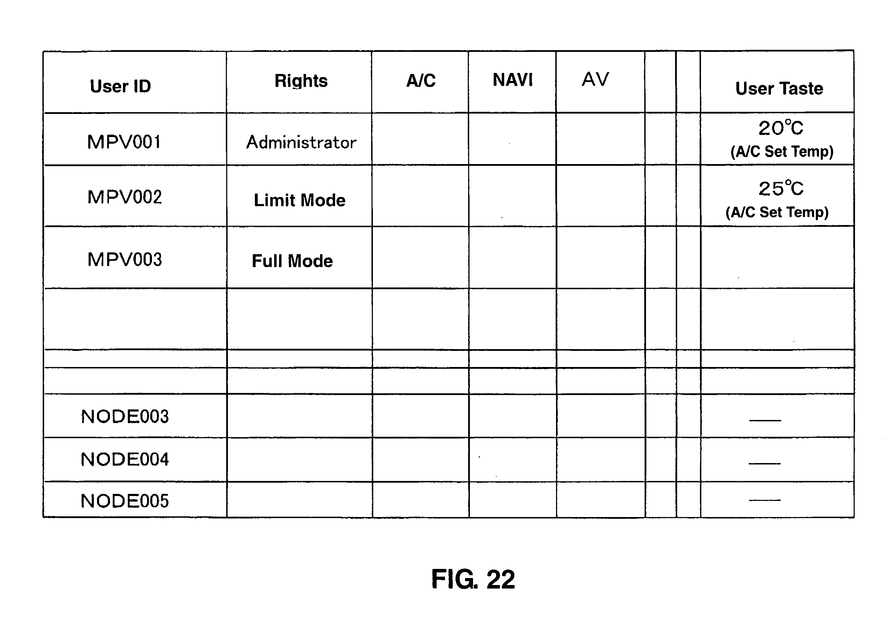

An example of the control of an onboard device control apparatus according to the third embodiment of the present invention will be described referring to FIGS. **21** and **22.** FIG. **21** is a flowchart showing the control of the onboard device control apparatus according to the third embodiment of the present invention. FIG. **22** is a table for determining tastes and rights of air conditioning for each user, which are memorized in advance at the gateway point **G** or the sensor node **SN.** Character references **S** denote steps in FIG. **21.** The example shown in FIG. **21** has the same as the above-described second embodiment in which the temperature sensors are used as the sensor of the sensor node **SN** and the air-conditioning device in the vehicle compartment is controlled based on the detection results of the temperature sensors. Additionally, according the third embodiment, operational rights of the air-conditioning advice differ in accordance with the ID of the portable terminal which the user (including the driver) getting on the vehicle carries.

Initially, as shown in FIG. **21,** the plural sensor nodes **S**N provided in the vehicle compartment form the sensor network in step **S141.** Herein, each sensor node **SN** has the above-described adhoc function. In the next step **S142,** a relay processing of another sensor node **SN** is executed. Herein, each sensor node **SN** has the above-described multihop function.

In the next step **S143,** the detection processing of the location of the sensor nodes **SN** is executed with the above-described "the centroid calculation of the beacon node received" or "the hop's number calculation of the beacon node received." Herein, in case the location is known in advance, for example, in case the sensor node **SN** is provided at the fixed seat or the vehicle roof, their locations may be registered in advice in the memory of the sensor node **SN.**

In the next step **S144,** the location data of the sensor nodes **SN** and the temperature data detected by the temperature sensors of the sensor nodes **SN** are received and memorized by the plural sensor nodes. The data sending/ receiving is conducted by the interface and the data memorization is conduced by the memory. In this step **S144,** as shown in FIG. **18,** for example, the sensor node 1 which measures data 1 keeps (memorizes) data 2 of another sensor node **2** and data 3 of further another sensor node **3.**

In the next step **S145,** the location data of each sensor node **SN** and the temperature data from the temperature sensor of each sensor node **SN** are sent to the gateway point **G.** The data sending is conducted by the interface. For example, as shown by arrows of FIG. **18,** the data is sent from the sensor nodes **SN** to the gateway point **G.**

Next, the gateway point **G** receives the location data of each sensor node **SN** and the temperature data from the temperature sensor of each sensor node **SN,** and the data of the pressure sensor in step **S151,** and memorizes them. The data receiving is conducted by the interface, and the data is memorized by the memory.

Then, when the user carrying the mobile terminal (portable terminal) **M** gets on the vehicle, the plural sensor nodes **SN** provided in the vehicle compartment form the network including the mobile terminal **M** with their functions (the above-described adhoc function and multihop function) in step **S161.**

In the next step **S162,** the location detection processing of the location of the mobile terminal **M** of the user is executed with the above-described "the centroid calculation of the beacon node received" or "the hop's number calculation of the beacon node received." Then, the ID of the mobile terminal **M** is detected via the interface of each sensor node **SN** and the interface of the mobile terminal **M** in step **S163.** Thus, it is determined who has got on the vehicle.

In the next step **S164,** the location and the ID of the mobile terminal **M** calculated in the step **S162** is sent via the interface of the mobile terminal **M.** The sensor nodes **SN** relay the data sent via their interfaces (step **S146**) and send the data to the gateway point **G.** The gateway point **G** receives the location and the ID of the mobile terminal **M** via the interface in step **S152.**

Herein, when the user has changed the setting temperature of the air-conditioning device **D** (step **S165**), the mobile terminal **M** sends its ID detected in the step **S163** via its interface and sends the data of the setting temperature after changing to the gateway point **G** in step **S166.** In this case, the sensor node **SN** relays the data in step **S147.**

The gateway point **G,** in step **S153,** receives the ID of the mobile terminal **M** received in the step **S153** or the ID of the mobile terminal **M** sent in the step **S166.** In case the setting temperature has changed (the step **S165** has been executed), the data is updated to the setting temperature which has been changed or sent in the steps **S165, S166** in accordance with the ID received in the step **S152.** The data is like the one shown in FIG. **22,** which will be described later.

In case the setting temperature has not been changed (the step **S165** has not been executed), the control proceeds to step **S154,** skipping the step **S153.** In the step **S154,** the target temperature distribution is calculated based on the target air-conditioning temperature data for each ID (user) which is memorized in the database (the memory of the gateway point **G** (or the memory of the sensor node)). The target temperature distribution is calculated with the user's taste air-conditioning data for each ID (user) and the location of the mobile terminal **M** (corresponding to every seat) calculated in the step **S162.** Further, according to the present embodiment, the temperature and the amount of air supplied can be set for each of the plural mobile terminals **M** with the network of the sensor nodes. Thereby, the temperature and the amount of air supplied may be adjusted among the plural mobile terminals **M** in case there is a big difference of the temperature and the air amount to be set by each passenger (each mobile terminal **M**), for example.

The target air-conditioning temperature data (table) for each ID (user) which is memorized in the database is like the one shown in FIG. **22,** for example, in which the taste of the air conditioning is set for each user ID, in such a manner that in example, a specified user likes the temperature of 20 degrees Celsius as the setting temperature, while another user likes the temperature of 25 degree Celsius. Further, the target air-conditioning temperature data includes data of operational rights of the air conditioning, such as an administrator to enable adjustments of all of the air-conditioning settings, a limit mode to have a limited air-conditioning setting, or a full mode to have most of the air-conditioning setting, which are set for each ID (user). In case the setting temperature has been changed (the step **S165** has been executed), the target air-conditioning temperature data (table) for each ID which is memorized in the above-described database is updated based on the ID of the mobile terminal **M** in the step **S153.** The table may be memorized in the memory portion of the gateway point **G,** the memory portion of the sensor node **SN,** or the memory portion of the mobile terminal.

In the next step **S155,** the target temperature at the location of the sensor node **SN** is stored in the memory of the gateway point **G** and sent to the sensor node **SN.** The sending is executed by the interference. The sensor node **SN** receives the target temperature in step **S148.** Each sensor node **SN** executes the temperature control processing based on the received data in step **S149.** This temperature control processing is the same as the above-described second embodiment, and any one of the above-described first through fourth embodiments.

In the next step **S150,** the operational amount U which has been calculated by the sensor node **SN** in the step **S149** is sent to the gateway point **G** via the interface in step **S150.** The gateway point **G** receives the operational amount U calculated by the sensor node **SN** via the interface and memorizes that in step **S156.**

Then, the final operational amount of the air-conditioning device **D** is calculated in step **S157** from the operational amount which is calculated at each senor node **SN** which has received and memorized in the step **S156.** Specifically, the supply amount of air from the vents of the air-conditioning device **D** and the temperature of the air supplied are controlled so as to provide the specified temperature characteristic (for example, the above-described target-temperature distribution data). Then, in the next step **S158,** the air-conditioning device is controlled so as to provide the supply amount of air and the air temperature calculated in the step **S156.**

EMBODIMENT 4

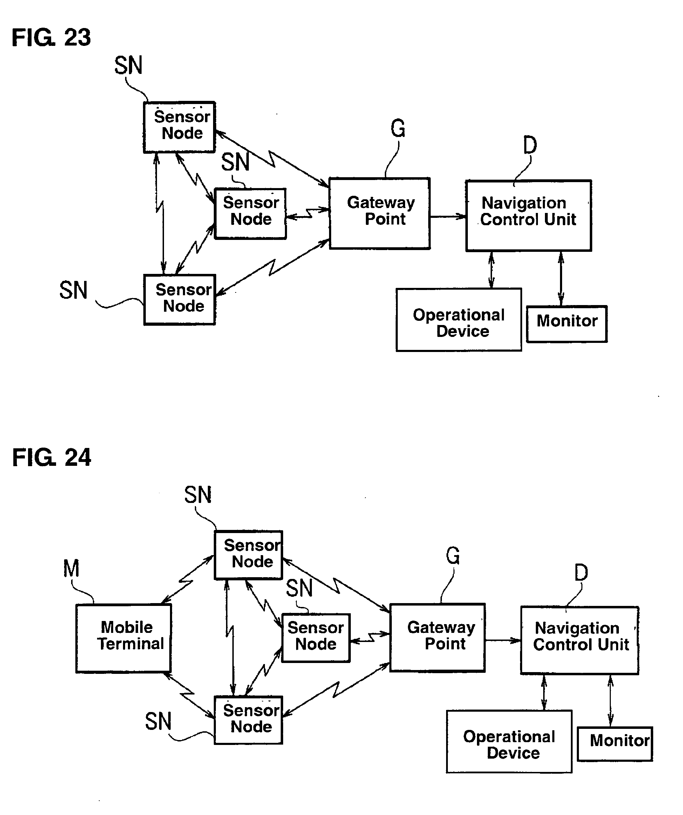

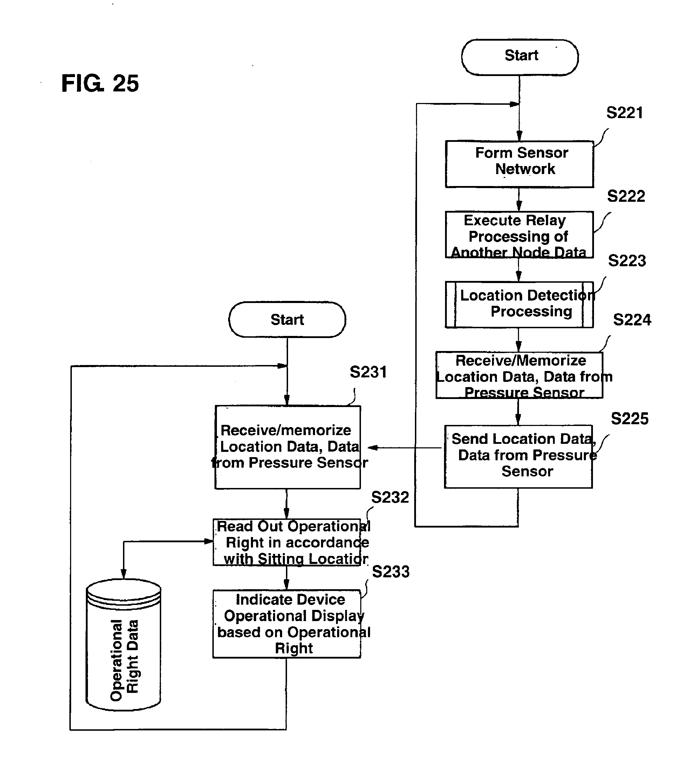

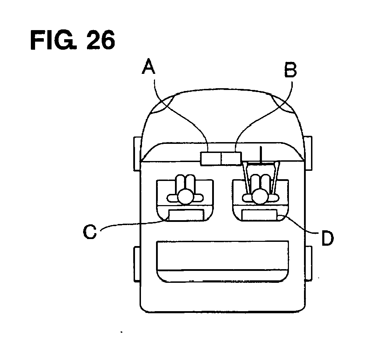

Hereinafter, an example of a control of an onboard device control apparatus according to the fourth embodiment of the present invention will be described referring to FIGS. **23, 25** and **26.** FIG. **23** is a diagram schematically showing network information among sensor nodes and a gateway point, and a device which is controlled by the gateway point. FIG. **25** is a flowchart showing a control of the onboard device control apparatus according to the fourth embodiment of the present invention. FIG. **26** is a diagram showing an example of locations of a monitor disposed in the vehicle and the passenger. Reference characters **S** denote steps in FIG. **25.**

In the fourth embodiment, the gateway point **G** receives information of the wireless communication from the respective sensor nodes **SN,** and controls limits of an operation of a navigation function and a television function of the navigation device which is provided as the onboard device (see FIG. **6**). Further, in the example of the fourth embodiment which is shown in FIG. **25,** the pressure sensor is preferably provided at each sensor node **SN** as the sitting sensor, and a determiner of an operational right of the navigation device is decided by the sitting position based on the detection result of the pressure sensor. For example, the driver seated in the driver's seat is decided as the operational-right determiner of the navigation device.

Initially, as shown in FIG. **25,** the plural sensor nodes **SN** provided in the vehicle compartment form the sensor network in step **S221.** Herein, each sensor node SN recognizes other sensor nodes **SN** and forms the network autonomously. The network has the adhoc function in which in case the sensor node **SN** is set newly, this new sensor node **SN** is added onto the network autonomously, while in case the specified sensor node **SN** is removed, this specified sensor node is deleted from the network autonomously.

In the next step **S222,** the relay processing of another sensor node **SN** is executed. Herein, each sensor node **SN** establishes the communication path (routing) to another sensor node **SN** autonomously, and relays the data, which is sent from another sensor node **SN** on the network, to another sensor node **SN.** This is the so-called multihop function.

In the next step **S223,** the detection processing of the location of the sensor nodes **SN** is executed with the above-described "the centroid calculation of the beacon node received" or "the hop's number calculation of the beacon node received." Herein, in case the location is known in advance, for example, in case the sensor node **SN** is provided at the fixed seat or the vehicle roof, their locations may be registered in advice in the memory of the sensor node **SN.**

Further, after the location detection processing is executed once, the location is memorized in the memory. Then, this memorized location may be used at the next processing of the location detection.

In the next step **S224,** the location data of the sensor nodes **SN** and the data detected by the pressure sensors of the sensor nodes **SN** are received and memorized by the plural sensor nodes. The data sending/receiving is conducted by the interface and the data memorization is conduced by the memory.

In the next step **S225,** the location data of each sensor node **SN** and the data from the pressure sensor of each sensor node **SN** are sent to the gateway point **G.** The data sending is conducted by the interface.

Next, the gateway point **G** receives the location data of each sensor node **SN** and the temperature data from the temperature sensor of each sensor node **SN,** and the data of the pressure sensor in step **S231,** and memorizes them. The data receiving is conducted by the interface, and the data is memorized by the memory.

In the next step **S232,** it is determined whether the passenger is seated or not and the seat location of the passenger seated is decided from the detection of the pressure sensor of the sensor node **SN,** and data for determining operational right in accordance with the location of the seat is read out from a database. Herein, the database is the memory of the gateway point **G** and/or the memory of the sensor node.

The data for determining operational right is the one in which, for example, a driver seated in a driver's seat conducts permission, prohibition or limit of operations of various onboard devices (the navigation device in the present embodiment) by another passenger seated in another seat as an operational-right determiner (administrator). Or, the data for determining operational right is the one in which the permission, prohibition or limit of the operations of the various onboard devices (the navigation device in the present embodiment) by another passenger seated in another seat, such as a passenger's (assistant's) seat, are memorized.

In the next step **S233,** an onboard-device operational display at each seat is indicated based on the data for determining operational right. In the example shown in FIG. **26,** displays **A-D** are disposed in the vehicle compartment, and an operational display is indicated at each display of **A-D** within a scope of the operational right allowed for the passenger seated in the seat. Herein, the display **B** of the driver's seat is indicated so that the driver can set all of the onboard devices. Meanwhile, while the indication of TV program on the display **B** is prohibited by the traffic regulations, the display **A** of the passenger's (assistant's) seat may be allowed to indicate the TV program as a style of the limit.


EMBODIMENT 5

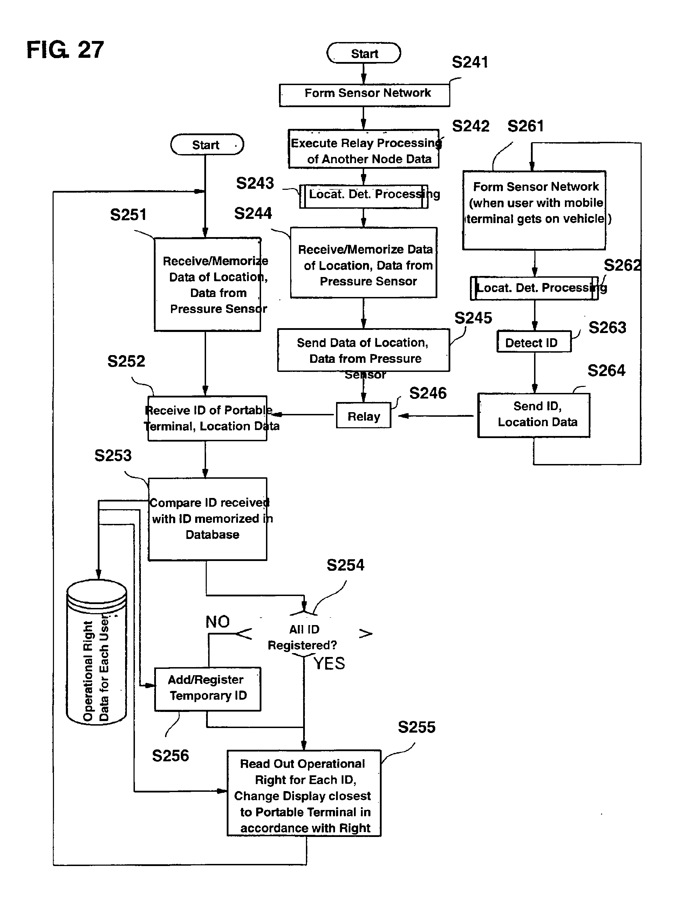

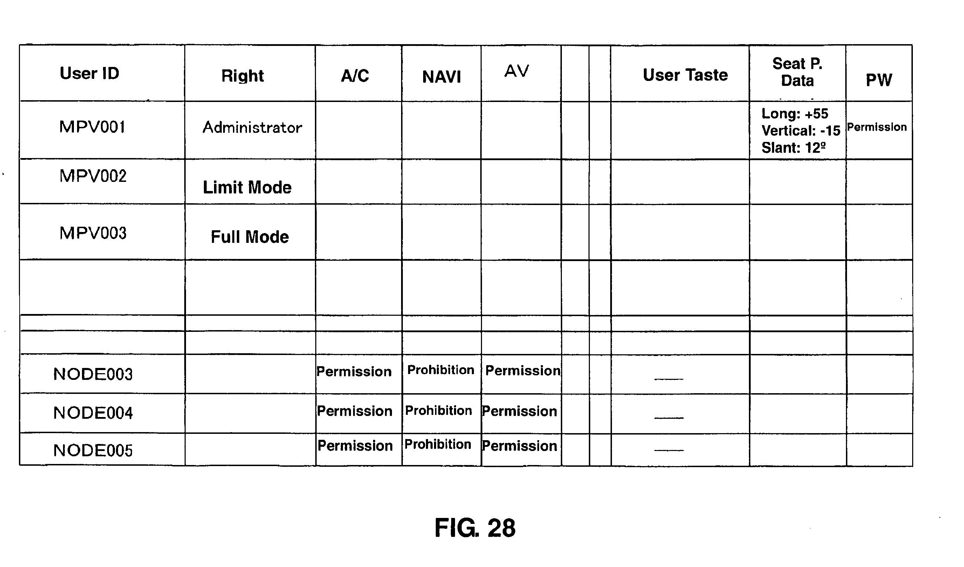

An example of the control of an onboard device control apparatus according to a fifth embodiment of the present invention will be described referring to FIGS. **24, 27** and **28.** FIG. **24** is a diagram schematically showing network information among the portable terminal, the sensor nodes and the gateway point, and the device which is controlled by the gateway point. FIG. **27** is a flowchart showing a control of the onboard device control apparatus according to the fifth embodiment of the present invention. FIG. **28** is a table for determining operational rights of the onboard device for each user, which are memorized in advance at the gateway point **G** or the sensor node **SN.** Character references **S** denote steps in FIG. **27.**

According to the example of the fifth embodiment which is shown in FIG. **27,** operational rights of the navigation device which is as the onboard device (see FIG. **24)** differ in accordance with the ID of the portable terminal which the user (including the driver) getting on the vehicle carries.

Initially, as shown in FIG. **27,** the plural sensor nodes **SN** provided in the vehicle compartment form the sensor network in step **S241.** Herein, each sensor node **SN** has the above-described adhoc function. In the next step **S242,** a relay processing of another sensor node **SN** is executed. Herein, each sensor node **SN** has the above-described multihop function.

In the next step **S243,** the detection processing of the location of the sensor node **SN** is executed with the above-described "the centroid calculation of the beacon node received" or "the hop's number calculation of the beacon node received." Herein, in case the location is known in advance, for example, in case the sensor node **SN** is provided at the fixed seat or the vehicle roof, their locations may be registered in advice in the memory of the sensor node **SN.**

In the next step **S244,** the location data of the sensor nodes **SN** and the data detected by the pressure sensors of the sensor nodes **SN** are received and memorized by the plural sensor nodes. The data sending/receiving is conducted by the interface and the data memorization is conduced by the memory.

In the next step **S245,** the location data of each sensor node **SN** and the data from the pressure sensor of each sensor node **SN** are sent to the gateway point **G.** The data sending is conducted by the interface.

Next, the gateway point **G** receives the location data of each sensor node **SN** and the data from the pressure sensor of each sensor node **SN,** and the data of the pressure sensor in step **S251,** and memorizes them. The data receiving is conducted by the interface, and the data is memorized by the memory.

Then, when the user carrying the mobile terminal (portable terminal) **M** gets on the vehicle, the plural sensor nodes **SN** provided in the vehicle compartment form the network including the mobile terminal M with their functions (the above-described adhoc function and multihop function) in step **S261.**

In the next step **S262,** the location detection processing of the location of the mobile terminal **M** of the user is executed with the above-described "the centroid calculation of the beacon node received" or "the hop's number calculation of the beacon node received." Then, the ID of the mobile terminal **M** is detected via the interface of each sensor node **SN** and the interface of the mobile terminal **M** in step **S263.** Thus, it is determined who has got on the vehicle.

In the next step **S264,** the location and the ID of the mobile terminal **M** calculated in the step **S262** is sent via the interface of the mobile terminal **M.** The sensor nodes **SN** relay the data sent via their interfaces (step **S246)** and send the data to the gateway point **G.** The gateway point **G** receives the location and the ID of the mobile terminal **M** via the interface in step **S252.**

The gateway point **G,** in step **S253,** compares the ID of the mobile terminal **M** which is received in the step **S252** with the ID within the operational right data for each user which is memorized in the database. The database is the memory of the gateway point **G** and/or the memory of the sensor node.

The operational-right data (table) for each ID (user) which is memorized in the database is like the one shown in FIG. **28,** for example, in which the data such as the administrator to enable adjustments of setting of all of the onboard devices including the navigation device, the limit mode to have the limited setting of the onboard device including the navigation, or the full mode to have most of the setting of the onboard device including the navigation device are set for each ID.

In the next step **S254,** it is determined whether or not the ID of the mobile terminal **M** which has been received in the step **S252** is included (registered) in the ID within the operational-right data for each user which is memorized in the database. When it is included, the control proceeds to step **S255,** where the operational right for each ID is read out of the table shown in FIG. **28** which is memorized in the database. Then, a specified display of the displays shown in FIG. **26** which is the closest to the ID of the mobile terminal **M** which has been received in the step **S252** is changed in accordance with the operational right based on the data read out.

Meanwhile, when the ID of the mobile terminal **M** which has been received in the step **S252** is not included in the ID within the operational-right data for each user which is memorized in the database, the control proceeds to step **S256,** where a temporary ID is added to this mobile terminal **M** and registered. Herein, the data for the temporary ID which has relatively many limits to the operational right is registered in the data shown in FIG. **28,** and the display is indicated or changed in accordance with the data in step **S255.**

The present invention should not be limited to the above-described embodiments, and any other modifications and improvements may be applied in the scope of the present invention.

**Claims**

1. An onboard device control apparatus which controls an operation of an onboard device (**D**), comprising:

   a plurality of sensor nodes (**SN**) comprising a state-detecting sensor portion to detect a specified state, a data processing portion to conduct calculation processing of data obtained by the state-detecting sensor portion, a memory portion to memorize specified data, and a communication portion to send and receive the data by wireless, respectively; and
   a control means to control the onboard device based on plural data of the plural sensor nodes (**SN**).

2. The onboard device control apparatus of claim 1, further comprising a network forming means to form a network of the plurality of sensor nodes (**SN**) which are provided at plural locations in a vehicle compartment which preferably comprises an adhoc function and/or a multihop function.

3. The onboard device control apparatus of any one or more of the preceding claims, wherein there is provided a sensor-node location calculating means which calculates location of the sensor node (**SN**), the location of which is not decided, based on data of location of another sensor node (**SN**), the location of which is decided, by using a centroid calculation and/or the location of the sensor node (**SN**) is not decided, based on distance of the sensor node (**SN**) from another sensor node (**SN**), the location of which is decided, by using a multi-angle measuring, said distance being calculated from data regarding the number of hops from the sensor node (**SN**), the location of which is not decided, and an average distance of one hop.

4. The onboard device control apparatus of any one or more of the preceding claims, wherein said onboard device (**D**) is an air-condition control device which has plural vents, said state-detecting sensor portion comprises a temperature sensor to detect temperature in the vehicle compartment, and/or said control means comprises a target-control-value calculating means which controls the air-condition control device based on data of the temperature sensor so as to provide a specified temperature distribution in the vehicle compartment, wherein preferably said temperature sensor includes a high-speed type of temperature sensor and a low-speed type of temperature sensor, there is preferably provided a memory means which is provided at said sensor node (**SN**) and/or a gateway point (**G**) which forms the network along with the sensor node (**SN**) and memorizes time-series temperature characteristic data as a target control value of said specified temperature distribution, said target-control-value calculating means refers to the time-series temperature characteristic data as the target control value, and said control means preferably controls the air-condition control device so as to obtain a temperature characteristic of the time-series temperature characteristic data.

5. The onboard device control apparatus of claim 4, wherein said target-control-value calculating means calculates a target control value based on data of a temperature difference of the plural sensor nodes (**SN**) so as to provide the specified temperature distribution in the vehicle compartment, and said control means controls temperature of conditioned air supplied from said plural vents of the air-condition control device so as to obtain said target control value and/or said state-detecting sensor portion comprises a sitting sensor to detect a passenger being seated in a seat, and said target-control-value calculating means calculates a target control value for the temperature distribution in the vehicle compartment based on the number of passengers seated and/or position of passengers seated.

6. The onboard device control apparatus of any one or more of the preceding claims, wherein said sensor node (**SN**) further comprises a portable terminal (**M**) detecting portion to detect a portable terminal which preferably has an identification ID for identifying the passenger, the onboard device control apparatus preferably further comprises a memory means to memorize data of said specified state which is preferable to each passenger for each identification ID of the passenger, and/or said target-control-value calculating means calculates a target control value for controlling said air-condition device based on said data of the specified state
and/or obtains a target control value for another identification ID via said network of the sensor nodes, and/or adjusts the target control values of the respective identification IDs in case there is a specified large difference in the target control values.

7. The onboard device control apparatus of any one or more of the preceding claims, wherein said sensor node (**SN**) comprises a receiving portion to receive an identification ID for identifying the passenger which is memorized in a memory portion of a portable terminal (**M**) carried by the passenger and a specified data, said network forming means forms a network of the sensor nodes (**SN**) which are provided at plural locations in the vehicle compartment along with the portable terminal carried by the passenger, and said control means controls the onboard device (**D**) based on plural data of the plural sensor nodes (**SN**) and the portable terminal (**M**) carried by the passenger which form the network in such a manner that the control means determines a control value of the onboard device or permission/prohibition of an operation of the onboard device (**D**) for each identification ID of the portable terminal (**M**) carried by the passenger who is detected seated by the sensor nodes, wherein said control means preferably adjusts the target control values of the identification IDs in case there is a specified large difference in the control values of the identification IDs.

8. The onboard device control apparatus of any one or more of the preceding claims, wherein said onboard device (**D**) is an electrically-operated seat, there is provided a memory means to memorize a seat position of the electrically-operated seat for each identification ID, and said control means controls the electrically-operated seat such that the seat position of the seat controlled becomes the one which is memorized by the memory means for each identification ID, wherein there is preferably provided a data updating means which updates the seat position memorized by said memory means in such a manner that the seat position originally memorized by the memory means is replaced by a new seat position which is set through the passenger's changing the electrically-operated seat.

9. The onboard device control apparatus of any one or more of the preceding claims, wherein said memory means is a memory portion of said portable terminal (**M**) which receives and memorizes data regarding the control of the onboard device (**D**), the data memorized by said memory portion is the one regarding a past seat position of the electrically-operated seat which is used at a past time of driving of the vehicle, and said control means controls the electrically-operated seat such that the seat position of the seat controlled becomes the past seat position which is used at the past time of driving of the vehicle, referring to the identification ID of the portable terminal (**M**) and the data of the past seat position.

10. The onboard device control apparatus of any one or more of the preceding claims, wherein said onboard device (**D**) is a power window, there is provided a memory means to memorize data of permission/prohibition of use of the power window for each identification ID, and said control means preferably controls the power window such that an operation of the power window is permitted or prohibited based on said data of the permission/prohibition memorized.

11. The onboard device control apparatus of any one or more of the preceding claims, wherein said onboard device (**D**) is a navigation device, plural operating means to operate the navigation device are provided at plural locations in the vehicle compartment, said state-detecting sensor portion of the sensor nodes (**SN**) detects a state of the passenger, there is provided a memory means to memorize data of an operational right of said operating means which is set in plural stages in accordance with the state of the passenger which is detected by the state-detecting sensor portion of the sensor nodes, there is provided an operational-right determining means to determine the operational right of said operating means by the passenger, comparing the state of the passenger detected by the state-detecting sensor portion of the sensor nodes (**SN**) with the plural-stage operational right memorized by the memory means, and there is an operation setting means to set said operational means so as to provide the operational right which is determined by the operational-right determining means, wherein preferably said state-detecting sensor portions of the sensor nodes are passenger detecting sensors which are provided at respective seats so as to determine a sitting position of the passenger, the data of the operational right memorized by said memory means is preferably the one of the operational right which is set in plural stages in accordance with the sitting position of the passenger, said operational-right determining means preferably determines the operational right of the passenger, comparing the operational right memorized with the sitting position of the passenger determined, and said operation setting means preferably sets the operational means so as to provide the operational right determined.

12. The onboard device control apparatus of any one or more of the preceding claims, wherein said sensor node (**SN**) further comprises a portable terminal detecting portion to detect a portable terminal (**M**) which has an identification ID for identifying the passenger, said memory means memorizes the data of the operational right of the operating means which is set in plural stages in accordance with said identification ID, and said operational-right determining means determines the operational right of the operating means by the passenger, comparing the identification ID of the passenger which is detected as the state of the passenger with the plural-stage operational right memorized by the memory means, wherein preferably said operational-right determining means determines that in case the passenger detected by said passenger detecting sensor does not have the portable terminal (**M**) or the identification ID, there exists a low-level operational right, without comparing the identification ID with the plural-stage operational right memorized by the memory means.

13. A control method of controlling an operation of an onboard device (**D**), comprising the steps of:

detecting data of a plurality of sensor nodes (**SN**),
conducting calculation processing of detected data,
memorizing specified data in a memory portion, and
sending and receiving the data by a wireless communication path, respectively; and
controlling the onboard device based on plural data of the plural sensor nodes (**SN**).

14. The control method of claim 13, further comprising the step of forming a network of the plurality of sensor nodes (**SN**) which are provided at plural locations in a vehicle compartment which preferably comprises an adhoc function and/or a multihop function.

15. Computer program product comprising computer-implemented instructions which, when loaded and executed on a suitable system, can perform the steps of a method of any one of the preceding claims 13 to 14.

FIG. 1

SN

SN

N

1

G

D

SN

2

FIG. 2

SN

SN

**FIG. 3**

SN

Memory

Software

Operating Software

Operating System

Application Software

Program Module

Application Data

Electric Source

Processor

Seat-P. Detect. Infrared-Rays
Sensor
Temperature Sensor

Pressure Sensor

Wireless Comm. IF

**FIG. 4**

G

Memory

Software

Operating Software

Operating System

Application Software

Program Module

Application Data

Electric Source

Processor

Device Control Portion

Wireless Comm. IF

## FIG. 5

M

Portable-Phone Base Middleware

Memory

Software

Operating Software

Operating System

Processor

Application Software

Program Module

Wireless Comm. IF

Application Data

ID

## FIG. 6

SN

Sensor Node

SN

Sensor Node

G

Gateway Point

D

Device

SN

Sensor Node

**FIG. 7**

**FIG. 8**

## FIG. 9

$$(Xe^{si}, Ye^{si}) = ((2+4+5)/3), (4+5+2)/3)) = (3,7,3,7)$$

(4,5)

(2,4)

(7,3)

(5,2)

(1,1)

## FIG. 10

Location Detection Processing

S11

Calculate Hop's Number from
Another Sensor Node or Portable Terminal

S12

Receive Average Distance of
One Hop

S13

Calculate Distance to Sensor Node or Portable
Terminal from Calculation of Hop's Number
and Average Distance of One Hop

S14

Calculate Distance to Three or more Sensor Nodes
or Portable Terminal, Measure Location by Multi-
Angle Measurement, and Set as Its Own Location

Return

## FIG. 11

75m

40m

$3 \times {}_{L2}$

$3 \times {}_{L3}$

$3 \times {}_{L1}$

100m

$C_{L1}=(100+40)/(6+2)=17.5$

$C_{L2}=(40+75)/(2+5)=16.42$

$C_{L3}=(75+100)/(6+5)=15.90$

$C_{L1}$: Average Distance of One Hop from L1

$C_{L2}$: Average Distance of One Hop from L2

$C_{L3}$: Average Distance of One Hop from L3

24

**FIG. 12**

Start — S21
Form Sensor Network

Execute Relay Processing of Another Node Data — S22

S23 — Locat. Det. Processing

S24 — Receive/Memorize Data of Location of each Sensor Node, Seat Position, Temperature, Pressure Sensor

Send Data of Location of each Sensor Node, Seat Position, Temperature, Pressure Sensor — S25

Relay — S26

Seat Position Readjusted? — S27
NO / YES

Send Seat Readjusting Data to Closest Portable Terminal — S28

Relay — S29

Start

S31 — Receive/Memorize Data of Location of Sensor Node, Seat Position, Temperature, Pressure Sensor

S32 — Receive Location/ID of Portable Terminal

S33 — Receive ID, Position, Temperature, Update data in accordance with Each ID

Data of Seat Position, Power Window for each User

Calculate Target Seat Position, Power Window based on Data for Each ID and Location — S34

Appropriate Seat Adjustment Processing — S35

Power-Window Control Processing — S36

S41 — Form Sensor Network (when user with mobile terminal gets on vehicle)

S42 — Locat. Det. Processing

Detect ID — S43

Send ID, Location Data — S44

Receive/Memorize Seat Readjusting Data — S45

Send ID, Seat Position Data — S46

| User ID | Rights | A/C | NAVI | AV | | | User Taste | Seat P. Data | PW |
|---------|--------|-----|------|-----|---|---|-----------|--------------|-----|
| MPV001 | Administrator | | | | | | | Long: +55<br>Vertical: -15<br>Slant: 12º | OK |
| MPV002 | **Limit Mode** | | | | | | | | |
| MPV003 | **Full Mode** | | | | | | | | |
| | | | | | | | | | |
| | | | | | | | | | |
| NODE003 | | | | | | | — | | |
| NODE004 | | | | | | | — | | |
| NODE005 | | | | | | | — | | |

**FIG. 13**

EP 2 105 811 A2

**FIG. 14**

```
┌─────────────────────┐
│  Appropriate Seat   │
│ Adjustment Processing│
└─────────────────────┘
          │
          ▼
                    S51
      ◇ Registered ? ◇──────── NO ──────┐
          │                             │          S52
         YES                            ▼      ┌──────────┐
          │                        ┌──────────┐│   Add    │
          │              S54       │Temporary ID│        S53
          ▼                        └──────────┘
┌─────────────────────┐               │
│Control Seat Position│               ▼
│based on Position Data│      ┌─────────────────────┐
│Memorized for Each ID │      │Control Seat Position │
└─────────────────────┘      │based on Data of Pressure│
          │                   │Sensor (Body Size of   │
          │                   │Portable Terminal)     │
          │                   └─────────────────────┘
          │                             │
          ◄─────────────────────────────┘
          ▼
     ( Retern )
```

**FIG. 15**

```
┌─────────────────────┐
│    Power Window     │
│  Control Processing │
└─────────────────────┘
          │
          ▼
                    S61
      ◇ Registered ? ◇──────── NO ──────┐
          │                             │
         YES                            │
          │                             │
          │              S63            ▼              S62
          ▼                   ┌─────────────────────┐
┌─────────────────────┐       │  Prohibit Power     │
│Control based on Power│       │     Window          │
│Window Permission     │       └─────────────────────┘
│Memorized for Each ID │                 │
└─────────────────────┘                 │
          │                             │
          ◄─────────────────────────────┘
          ▼
     ( Return )
```

# FIG. 16

SN

| Memory | |
|---|---|
| **Software** | |
| Operating Software | |
| Operating System | |
| Application Software | |
| Program Module | |
| Application Data | |

Electric Source

Processor

High-Speed Temperature Sensor
Low-Speed Temperature Sensor

Pressure Sensor

Wireless Comm. IF

## FIG. 17

Start

**Form Sensor Network** — S121

**Execute Relay Processing of Another Node Data** — S122

**Location Detection Processing** — S123

**Receive/Memorize Location Data, Temperature** — S124

**Send Location Data Temperature** — S125

**Temperature Control Processing** — S126

**Send Operational Amount Calculated by Each Sensor Node** — S127

Start

**Receive/Memorize Location Data, Temperature Data** — S131

**Calculate Target Temperature of Each Location** — S132

**Send/Memorize Target Temperature of Each Location** — S133

**Receive/Memorize Operational Amount Calculated by Sensor Node** — S134

**Calculate Final Operational Amount from Each Operational Amount** — S135

**Control Device** — S136

Target Temperature Distribution

## FIG. 18

## FIG. 19

## FIG. 20

Response Characteristic of High-Speed Type of Temperature Sensor

**FIG. 21**

Start — S141

Form Sensor Network

Execute Relay Processing of Another Node Data — S142

Locat. Det. Processing — S143

Receive/Memorize Data of Location of each Sensor Node, Temperature — S144

Send Data of Location of each Sensor Node, Temperature — S145

Relay — S146

Relay — S147

Receive Target Temperature of Each Location — S148

Temp. Control Processing — S149

Send Operational Amount Calculated by Each Sensor Node — S150

Start

Receive/Memorize Data of Location of each Sensor Node Temperature — S151

Receive Location/ID of Portable Terminal — S152

Receive ID, Setting Temperature, Update data in accordance with Each ID — S153

Target A/C Temp Data for each User

Calculate Target Temperature Distribution based on Data for Each ID and Location — S154

Send/Memorize Target Temperature of Each Location — S155

Receive/Memorize Operational Amount Calculated by Each Sensor Node — S156

Calculate Final Operational Amount from Operational Amount — S157

Control Device — S158

Form Sensor Network (when user with mobile terminal gets on vehicle) — S161

Locat. Det. Processing — S162

Detect ID — S163

Send ID, Location Data — S164

Set Temp Changed? — S165
NO
YES

Send ID, Set Temp — S166

| User ID | Rights | A/C | NAVI | AV | | | User Taste |
|---------|--------|-----|------|----|--|--|------------|
| MPV001 | Administrator | | | | | | 20°C<br>(A/C Set Temp) |
| MPV002 | Limit Mode | | | | | | 25°C<br>(A/C Set Temp) |
| MPV003 | Full Mode | | | | | | |
| | | | | | | | |
| | | | | | | | |
| NODE003 | | | | | | | — |
| NODE004 | | | | | | | — |
| NODE005 | | | | | | | — |

FIG. 22

**FIG. 23**

**FIG. 24**

**FIG. 25**

```
                                    ( Start )
                                        │
                                        ▼
                              ┌──────────────────┐  S221
                              │   Form Sensor    │
                              │     Network      │
                              └──────────────────┘
                                        │
                                        ▼            S222
                              ┌──────────────────┐
                              │  Execute Relay   │
                              │   Processing of  │
                              │ Another Node Data│  S223
                              ├──────────────────┤
                              │Location Detection│
                              │    Processing    │
                              └──────────────────┘  S224
                                        │
                                        ▼
                              ┌──────────────────┐
                              │ Receive/Memorize │
                              │Location Data, Data from│
                              │ Pressure Sensor  │  S225
                              └──────────────────┘
                                        │
                                        ▼
         ( Start )            ┌──────────────────┐
             │               │ Send Location Data, │
             ▼               │ Data from Pressure  │
    ┌──────────────────┐     │     Sensor       │
    │ Receive/memorize │◄────└──────────────────┘
    │Location Data, Data│ S231
    │from Pressure Sensor│
    └──────────────────┘
             │
             ▼              S232
    ┌──────────────────┐
    │Read Out Operational│
    │ Right in accordance│
    │ with Sitting Location│
    └──────────────────┘  S233
             │
             ▼
    ┌──────────────────┐
    │  Indicate Device │
    │Operational Display│
    │based on Operational│
    │      Right       │
    └──────────────────┘
```

Operational Right Data

**FIG. 26**

**FIG. 27**

Start

Form Sensor Network — S241

Execute Relay Processing of Another Node Data — S242

S243 — Locat. Det. Processing

S244 — Receive/Memorize Data of Location, Data from Pressure Sensor

Send Data of Location, Data from Pressure Sensor — S245

S246 — Relay

Start

S251 — Receive/Memorize Data of Location, Data from Pressure Sensor

S252 — Receive ID of Portable Terminal, Location Data

S253 — Compare ID received with ID memorized in Database

S254 — All ID Registered?

NO

YES

Add/Register Temporary ID

S256

Operational Right Data for Each User

S255 — Read Out Operational Right for Each ID, Change Display closest to Portable Terminal in accordance with Right

S261 — Form Sensor Network (when user with mobile terminal gets on vehicle)

S262 — Locat. Det. Processing

S263 — Detect ID

S264 — Send ID, Location Data

| User ID | Right | A/C | NAVI | AV | | | User Taste | Seat P. Data | PW |
|---|---|---|---|---|---|---|---|---|---|
| MPV001 | Administrator | | | | | | | Long: +55<br>Vertical: -15<br>Slant: 12° | Permission |
| MPV002 | **Limit Mode** | | | | | | | | |
| MPV003 | **Full Mode** | | | | | | | | |
| | | | | | | | | | |
| | | | | | | | | | |
| NODE003 | | Permission | Prohibition | Permission | | | —— | | |
| NODE004 | | Permission | Prohibition | Permission | | | —— | | |
| NODE005 | | Permission | Prohibition | Permission | | | —— | | |

FIG. 28

**EP 2 105 811 A2**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2003312391 A
- JP 2004291679 A

- JP 2007118626 A